# FASCICULE DE BREVET EUROPEEN

(11) **EP 4 082 064 B1**
(45) Date de publication et mention de la délivrance du brevet: **16.10.2024**
(21) Numéro de dépôt: 20829680.6
(22) Date de dépôt: 23.12.2020
(51) Int. Cl.: H01M 4/74, H01M 50/117, H01M 50/11, H01M 50/121, H01M 50/124, H01M 50/131, H01M 50/533, H01M 10/0585, H01M 10/0525

(54) **PROCÉDÉ DE FABRICATION DE BATTERIES À IONS DE LITHIUM, NOTAMMENT À FORTE PUISSANCE, ET BATTERIE OBTENUE PAR CE PROCÉDÉ**
VERFAHREN ZUR HERSTELLUNG VON LITHIUM-ION-BATTERIEN, INSBESONDERE HOHER LEISTUNG UND BATTERIE, DIE DURCH DIESES VERFAHREN ERHALTEN WERDEN
PROCESS FOR MANUFACTURING LITHIUM ION BATTERIES, ESPECIALLY HIGH POWER, AND BATTERY OBTAINED BY THIS PROCESS

(30) Priorité: 24.12.2019 FR 1915529; 24.12.2019 FR 1915566; 23.01.2020 FR 2000677; 20.05.2020 FR 2005140
(43) Date de publication de la demande: 02.11.2022
(73) Titulaire: I-TEN, 69570 Dardilly (FR)
(72) Inventeur: GABEN, Fabien, 69570 Dardilly (FR); CAYREFOURCQ, Ian, 38090 Villefontaine (FR); GRUET, David, 69009 LYON (FR)
(74) Mandataire: Regimbeau
(86) Numéro de dépôt international: PCT/IB2020/062399
(87) Numéro de publication internationale: WO 2021/130697

(56) Documents cités:
- FR-A1- 3 068 830
- US-A1- 2012 045 685
- US-A1- 2016 013 513

## Description

### Domaine technique de l'invention

La présente invention se rapporte à la fabrication de batteries à ions de lithium. L'invention concerne un nouveau procédé de fabrication de batteries, et notamment de batteries à ions de lithium à forte puissance. Elle concerne également les batteries obtenues par ce procédé, qui présentent une architecture nouvelle qui leur confère une durée de vie améliorée.

### Etat de la technique

Afin d'accroitre le rendement de production des batteries rechargeables à forte densité d'énergie et forte densité de puissance, telles que des batteries entièrement solides ou des batteries imprégnées d'un électrolyte liquide, la fabrication simultanée de plusieurs batteries peut être réalisée à partir d'une superposition de feuilles alternées d'anode et de cathode préalablement revêtues d'une couche d'électrolyte.

WO 2016/001584 (I-TEN) décrit des feuilles comprenant un substrat conducteur recouvert successivement d'une couche d'électrode recouverte d'une couche d'électrolyte ; ces feuilles sont découpées, avant ou après dépôt, selon des motifs, notamment en forme de U. Ces feuilles sont empilées de manière alternée afin de constituer un empilement de plusieurs cellules élémentaires. Les motifs de découpes des anodes et cathodes sont placés en configuration « tête bêche » de manière à ce que l'empilement des couches de cathode et d'anode soit décalé latéralement. Après l'étape d'empilement, il est connu de ce document de déposer un système d'encapsulation en couche épaisse d'une dizaine de microns et conformai, typiquement une couche polymérique, sur l'empilement et dans les cavités disponibles présentes au sein de l'empilement. Ceci permet d'assurer d'une part, la rigidité de la structure au niveau des plans de coupe et d'autre part, la protection de la cellule de la batterie vis-à-vis de l'atmosphère. Une fois l'empilement réalisé et encapsulé dans une structure rigide, on le découpe suivant des plans de coupe pour obtenir des batteries unitaires, avec la mise à nu sur chacun des plans de coupe des connexions cathodique et anodique des batteries. Il se trouve que lors de ces découpes, le système d'encapsulation peut être arraché, ce qui entraîne une discontinuité de l'étanchéité de la batterie. Il est aussi connu d'ajouter des terminaisons (i.e. des contacts électriques) au niveau où ces connexions cathodique et anodique sont apparentes.

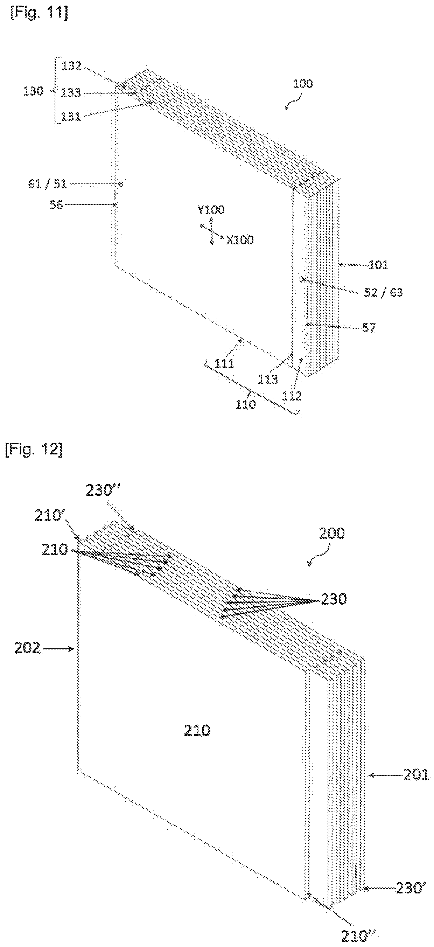

Cet état de la technique est expliqué ici en plus grand détail en référence à la figure 12 qui illustre une structure de batterie à ions de lithium décrite dans WO 2016/001584. La batterie **200** comprend plusieurs anodes **230** et plusieurs cathodes **210,** qui sont disposées les unes au-dessous des autres de façon alternée. Chaque anode et chaque cathode comprend une couche d'un matériau actif respectif d'anode ou de cathode, appelée couche d'anode, respectivement couche de cathode. Par ailleurs, une couche d'un matériau d'électrolyte, non représentée sur la figure 12, est intercalée entre l'anode et la cathode, de sorte que ce matériau d'électrolyte sépare deux couches actives en regard. L'épaisseur des différentes couches qui les constituent ne dépasse normalement pas les 15 µm, et est souvent comprise entre 2 µm et 8 µm. La batterie présente, sur un premier bord latéral **201,** des connexions anodiques **230'** situées les unes au-dessous des autres. Par ailleurs, sur le bord latéral opposé **202,** il est prévu des connexions cathodiques **210'** situées les unes au-dessous des autres. L'empilement des anodes **230** et des cathodes **210** est décalé latéralement. Les connexions cathodiques **210'** sont situées en saillie, par rapport à la face libre **230"** de l'anode. De manière analogue, sur le bord opposé **201,** la face libre **210"** de la cathode est située en retrait par rapport à la face libre de l'anode sur laquelle sont déposées ultérieurement des connexions anodiques **230'** .

Cette solution connue présente cependant certains inconvénients. En effet, en fonction du positionnement des électrodes, notamment de la proximité des bords des électrodes pour les batteries multicouches et de la propreté des découpes, un courant de fuite peut apparaitre sur les extrémités, typiquement sous la forme d'un court-circuit rampant. Il diminue la performance de la batterie, et ce, malgré l'utilisation d'un système d'encapsulation autour de la batterie et aux abords des connexions cathodiques et anodiques. Par ailleurs, on constate parfois un dépôt insatisfaisant du système d'encapsulation sur la batterie, notamment sur les bords de la batterie au niveau des espaces créés par les décalages latéraux des électrodes sur les bords de batterie.

Par ailleurs, étant donné que les terminaisons, respectivement d'anode et de cathode, sont situées en retrait des couches adjacentes, respectivement de cathode et d'anode, il est nécessaire de pratiquer une découpe de larges dimensions. Une telle découpe doit alors être remplie au moyen d'un matériau isolant. Etant donné ses dimensions importantes, cette découpe conduit à une perte substantielle de matières utiles, pour la réalisation de la batterie proprement dite. Par ailleurs, elle impose de déposer de fortes épaisseurs d'isolant, dans les cavités disponibles présentes au sein de l'empilement. Un isolant épais risque de fragiliser l'ensemble du système d'encapsulation de la batterie, car lors de la découpe, le système d'encapsulation déposé en couche épaisse a tendance à se délaminer.

FR3068830A1 divulgue que toutes ces feuilles présentent des échancrures, de préférence des orifices ou trous concentriques de manière à ce que lorsque ces perforations sont superposées, toutes les cathodes et toutes les anodes de ces feuilles définissent au moins une région en saillie, destinée à former une zone de connexion accessible. De plus, le document divulgue que toutes ces feuilles présentent des perforations à leurs quatre extrémités de manière à ce que lorsque ces perforations sont superposées, toutes les cathodes et toutes les anodes de ces feuilles sont superposées et décalées latéralement et forment régions en retrait. L'architecture selon l'état de la technique présente donc à la fois des inconvénients techniques et économiques.

Et enfin, pour de nombreuses applications, il est important de réduire la résistance des batteries, qui engendre une perte de puissance. Pour les batteries de très forte puissance selon l'état de la technique, la résistance des éléments de connexion contribue de manière significative à la résistance de la batterie : une architecture de batterie qui a pour effet d'augmenter la résistance des éléments de connexion ne serait pas acceptable, même si elle pouvait apporter une solution à certains autres problèmes énoncés ci-dessus. A ce titre, la connexion entre les éléments de connexion et les surfaces conductrices de la batterie destinées à entrer en contact avec lesdits éléments de connexion présente une résistance de contact, qui doit être minimisée. Cette connexion peut se faire de manière simple par collage. Pour illustrer cela à l'aide de la figure 12 précitée, une feuille métallique peut être collée sur les tranches des anodes **230'** et des cathodes **210',** après encapsulation de la batterie et découpe latérale qui met à nu ces tranches. Une bonne connexion présente une faible résistance électrique, qui ne doit pas se dégrader au cours de la durée de vie de la batterie.

Or, les colles conductrices qui sont souvent utilisées pour coller des feuilles métalliques au niveau des terminaisons présentent généralement une importante résistance de contact, surtout les colles contenant du graphite. On sait en revanche que d'excellentes propriétés de conduction électriques sont obtenues avec des encres contenant des nanoparticules métalliques ou des nanoparticules de carbure ou de nitrures. Cependant, cette faible résistance n'est obtenue que dans le cas où ces encres subissent un traitement thermique à une température suffisante pour conduire au frittage des nanoparticules conductrices. En règle générale, une température d'environ 400 °C conduit à un frittage qui reste incomplet, mais une telle température est bien trop élevée pour des batteries contenant un électrolyte liquide.

Par ailleurs, la densité des encres frittées n'est pas suffisamment élevée pour que ces encres soient être imperméables à la vapeur d'eau (cette perméabilité est exprimée par le taux de transmission de la vapeur d'eau (appelé Water Vapor Transmission Rate, abrégé WVTR en anglais, et appelé ci-après coefficient WVTR) ; tel est le cas par exemple de l'encre Métalon^{®}-Nano Copper de la société Novacentrix^{®}. Il existe donc un réel besoin d'améliorer la qualité du contact électrique entre les surfaces conductrices de batterie et les éléments de connexion, à la fois pour diminuer la résistance de contact et pour améliorer la durabilité de ce contact électrique.

La présente invention vise à remédier au moins en partie à certains inconvénients de l'art antérieur évoqués ci-dessus.

Elle vise en particulier à accroitre le rendement de production des batteries rechargeables à forte densité d'énergie et forte densité de puissance et à réaliser des encapsulations plus performantes à moindre coût.

Elle vise en particulier à proposer un procédé qui diminue le risque de court-circuit, et qui permet de fabriquer une batterie présentant une faible autodécharge.

Elle vise en particulier à proposer un procédé, qui permet de fabriquer de manière simple, fiable et rapide une batterie présentant une durée de vie très élevée.

Elle vise également à proposer un tel procédé, qui utilise une étape de découpe de meilleure qualité que dans l'art antérieur.

Elle vise également à proposer un tel procédé, qui permet d'améliorer les phases d'encapsulation et l'encapsulation elle-même, intervenant lors de la réalisation de la batterie finale.

Elle vise également à proposer un procédé de fabrication des batteries qui engendre moins de perte de matières.

En tout état de cause, la solution apportée à ces problèmes ne doit pas augmenter la résistance de la batterie, et doit, si possible, la réduire.

### Objets de l'invention

Au moins un des objectifs ci-dessus est atteint par l'intermédiaire d'au moins l'un des objets selon l'invention tel que présentés ci-après. La présente invention propose comme objets respectifs une batterie, son procédé de fabrication, un dispositif consommateur d'énergie ainsi qu'une batterie selon un autre mode de réalisation, ces objets étant libellés dans les revendications annexées.

La présente invention propose comme premier objet une batterie (100) comprenant au moins une anode (3) et au moins une cathode (1), disposée l'une au-dessus de l'autre de manière alternée, ladite batterie (100) comprenant des bords latéraux (101, 102) comprenant au moins une zone de connexion anodique et au moins une zone de connexion cathodique, latéralement opposée à la zone de connexion anodique, et des bords longitudinaux (103, 104), dans laquelle l'anode (3) comprend :
- un substrat collecteur de courant,
- au moins une couche d'anode, et
- éventuellement une couche d'un matériau d'électrolyte ou d'un séparateur imprégné d'un électrolyte,

et la cathode (1) comprend :
   - un substrat collecteur de courant,
   - au moins une couche de cathode, et
   - éventuellement une couche d'un matériau d'électrolyte ou d'un séparateur imprégné d'un électrolyte,
de sorte que la batterie comprend un empilement élémentaire successivement d'au moins une couche d'anode, d'au moins une couche d'un matériau d'électrolyte ou d'un séparateur imprégné d'un électrolyte, et d'au moins une couche de cathode,
caractérisée en ce que
   - chaque anode et chaque cathode comprend un corps principal (111, 131) respectif, séparé d'un corps secondaire (112, 132) respectif, par un espace libre (113, 133) de tout matériau d'électrode, d'électrolyte et de substrat collecteur de courant, ledit espace libre reliant les bords longitudinaux (103, 104) opposés de la batterie,
   - chaque anode et chaque cathode comprend, en vue de dessus, au moins un premier trou débouchant (51, 53) réalisé dans le corps principal et un second trou débouchant (52, 54) réalisé dans le corps secondaire,
      étant entendu que chaque premier trou débouchant (51) réalisé dans le corps principal de la cathode, s'étend dans le prolongement de chaque second trou débouchant (54) réalisé dans le corps secondaire de l'anode, de sorte que ces trous (51, 54), s'étendant les uns dans le prolongement des autres, forment un premier passage débouchant (61) qui traverse de part en part la batterie,
      et que chaque premier trou débouchant (53) réalisé dans le corps principal de l'anode, s'étend dans le prolongement de chaque second trou débouchant (52) réalisé dans le corps secondaire de la cathode, de sorte que ces trous (52, 53), s'étendant les uns dans le prolongement des autres, forment un second passage débouchant (63) qui traverse de part en part la batterie,
   - la batterie comprend en outre au moins un moyen conducteur cathodique (71, 71', 71") reçu dans ledit premier passage débouchant (61) et au moins un moyen conducteur anodique (73, 73', 73") reçu dans ledit second passage débouchant (63), le moyen conducteur anodique (73, 73', 73") étant apte à collecter au moins une partie du courant de la batterie en direction d'au moins une zone de connexion anodique et le moyen conducteur cathodique (71, 71', 71") étant apte à collecter au moins une partie du courant de la batterie en direction d'au moins une zone de connexion cathodique.

Selon des caractéristiques préférées de la batterie conforme à l'invention, qui peuvent être prises isolément ou selon toute caractéristique techniquement compatible
- chaque passage débouchant s'étend à distance d'un bord latéral en regard (101,102),
- la plus petite distance (D₅₉ / D₅₆) séparant chaque passage débouchant (61) et ledit bord latéral en regard est comprise entre 0,04 mm et 1,95 mm,
- chaque passage débouchant est ménagé directement dans ledit bord latéral (401, 402), le moyen conducteur respectivement cathodique ou anodique affleurant ledit bord latéral et présentant notamment une forme de demi-cylindre,
- les moyens conducteurs anodiques et cathodiques sont choisis, indifféremment l'un de l'autre, parmi :
   - une barre formée d'un matériau conducteur électrique,
   - une tige métallique à ajustement serré,
- une tige métallique entourée d'un matériau fourreau conducteur électrique,
- les deux extrémités opposées, soit de ladite barre, soit de ladite tige métallique définissent des têtes de fixation,
- la batterie comprend en outre
   > un support de connexion électrique, réalisé au moins en partie en un matériau conducteur,
   > des moyens d'isolation électrique, permettant d'isoler mutuellement deux régions distantes de ce support de connexion, ces régions distantes formant des chemins de connexion électrique respectifs,
   > ledit moyen conducteur cathodique étant mis en contact électrique avec un premier chemin de connexion électrique, alors que ledit moyen conducteur anodique est mis en contact électrique avec le second chemin de connexion électrique,
- le support de connexion électrique est de type monocouche, notamment une grille métallique ou encore un interposer silicium,
- le support de connexion électrique comprend plusieurs couches disposées les unes au-dessous des autres, ce support étant notamment de type circuit imprimé,
- la dimension transversale, ou largeur, de l'espace libre (L₁₁₃) est comprise entre 0,01 mm et 0,5 mm,
- la dimension transversale, ou largeur, des corps secondaires (L₁₁₂) est comprise entre 0,05 mm et 2 mm,
- des faces libres des corps secondaires respectivement des cathodes (112') et des anodes (132'), qui sont opposées à l'espace libre, affleurent des faces libres du corps principal respectivement des anodes (131') et des cathodes (111'),
- elle comprend un système d'encapsulation revêtant quatre des six faces de ladite batterie, et partiellement les deux autres faces, ces deux autres faces étant opposées et sensiblement perpendiculaires aux premier et second passages débouchants (61, 63) de la batterie comprenant au moins une zone de connexion anodique et au moins une zone de connexion cathodique,
- le système d'encapsulation comprend :
   - au moins une première couche de recouvrement, de préférence choisie parmi le parylène, le parylène de type F, le polyimide, les résines epoxy, le silicone, le polyamide, la silice sol-gel, la silice organique et/ou un mélange de ceux-ci, déposée sur la batterie,
   - au moins une deuxième couche de recouvrement composée d'une matière électriquement isolante, déposée par dépôt de couches atomiques ou PECVD, HDPCVD ou ICPCVD sur ladite au moins première couche de recouvrement,
   étant entendu que cette séquence d'au moins une première couche de recouvrement et d'au moins une deuxième couche de recouvrement peut être répétée z fois avec z ≥ 1.
- le système d'encapsulation comprend :
   - au moins une première couche de recouvrement ayant un très faible coefficient WVTR, de préférence un coefficient de WVTR inférieur à 10⁻⁵ g/m².d, déposée à la périphérie externe de l'empilement de feuilles anodique et cathodique,
   étant entendu que cette première couche de recouvrement peut être répétée z' fois avec z' ≥ 1.
- ladite au moins première couche de recouvrement comprend :
   - un matériau céramique, de préférence choisi parmi des oxydes, des nitrures, des oxynitrures, du SiₓN_{y}, SiO₂, SiON du Silicium amorphe ou du SiC, et/ou
   - un verre à bas point de fusion, de préférence un verre dont le point de fusion est inférieur à 600°C, plus préférentiellement un verre à bas point de fusion choisi parmi SiO₂-B₂O₃ ; Bi₂O₃-B₂O₃, ZnO-Bi₂O₃-B₂O₃, TeO₂-V₂O₅ et PbO-SiO₂,
- elle comprend un système de terminaison recouvrant au moins la zone de connexion anodique (75, 75') et au moins la zone de connexion cathodique (76, 76'),
- le système de terminaison comprend successivement :
   - une première couche de polymère conducteur, de préférence une résine chargée à l'argent,
   - une seconde couche de nickel disposée sur la première couche du système de terminaison, et
   - une troisième couche d'étain, disposée sur la deuxième couche du système de terminaison.

L'invention a également pour objet un procédé de fabrication d'une batterie ci-dessus, ledit procédé de fabrication comprenant :
a) l'approvisionnement d'un empilement (I) de feuilles alternées, cet empilement comprenant des premières feuilles ou feuilles d'anode dont chacune est destinée à former une couche d'anode de plusieurs batteries, ainsi que des deuxièmes feuilles ou feuilles de cathode dont chacune est destinée à former une couche de cathode de plusieurs batteries, chaque feuille d'anode comprenant au moins une fente ou zone vide (34) d'anode et chaque feuille de cathode comprenant au moins une fente ou zone vide (14) de cathode, chaque fente délimitant au moins une partie dudit espace libre de tout matériau d'électrode, d'électrolyte et de substrat collecteur de courant,
b) la réalisation d'un traitement thermique et/ou d'une compression mécanique de l'empilement de feuilles alternées précédemment approvisionné
c) pour chaque anode et chaque cathode, la réalisation d'au moins un premier trou débouchant (51, 53) dans le corps principal et la réalisation d'au moins un second trou débouchant (52, 54) dans le corps secondaire,
   ledit premier trou débouchant (51), réalisé dans le corps principal de la cathode, s'étendant dans le prolongement du second trou débouchant (54) réalisé dans le corps secondaire de l'anode, de sorte que ces trous (51, 54), s'étendant les uns dans le prolongement des autres, forment un premier passage débouchant (61) qui traverse de part en part la batterie,
   et ledit premier trou débouchant (53), réalisé dans le corps principal de l'anode, s'étendant dans le prolongement du second trou débouchant (52), réalisé dans le corps secondaire de la cathode, de sorte que ces trous (52, 53), s'étendant les uns dans le prolongement des autres, forment un second passage débouchant (63) qui traverse de part en part la batterie, étant entendu que l'étape c) peut être réalisée avant l'étape a) sur les feuilles d'anode et de cathode ou après l'étape b),
d) l'introduction d'un moyen conducteur cathodique (71, 71', 71") dans le premier passage débouchant (61) et d'un moyen conducteur anodique (73, 73', 73") dans le second passage débouchant (63), chacun de ces moyens conducteurs étant apte à collecter au moins une partie du courant de la batterie,
e) la réalisation de découpes (Dₙ, D'ₙ) permettant d'isoler une batterie donnée

Selon d'autres caractéristiques du procédé conforme à l'invention, qui peuvent être prises isolément ou selon toute caractéristique techniquement compatible
- on réalise les passages débouchants à distance du bord latéral,
- on ménage au moins une perforation sur le trajet de chaque découpe, chaque perforation délimitant au moins une partie de chaque passage débouchant,
- ladite fente respectivement d'anode et de cathode comprend deux parties longitudinales (16, 36) au moins en partie superposées, destinées à délimiter les bords longitudinaux (103, 104) de la batterie, ainsi qu'une partie latérale (18, 38) reliant lesdites deux parties longitudinales, la partie latérale de la fente d'anode (38) et la partie latérale de la fente de cathode (18) étant mutuellement décalées, la première découpe s'étendant entre la partie latérale de la fente d'anode et l'extrémité en regard des parties longitudinales, alors que la seconde découpe s'étend entre la partie latérale de la fente de cathode et l'extrémité en regard des parties longitudinales,
- chaque fente présente une forme globale de H, les parties longitudinales formant les évidements principaux verticaux du H, alors que la partie latérale forme le canal du H,
- ladite fente respectivement d'anode et de cathode est allongée, en présentant notamment une forme de I, lesdites fentes d'anode étant mutuellement superposées, lesdites fentes de cathode étant mutuellement superposées, lesdites fentes d'anode étant décalées par rapport auxdites fentes de cathode de manière à définir une pluralité d'espaces intercalaires, lesdites découpes étant réalisées dans lesdits espaces intercalaires,
- il comprend, après l'étape b) ou après l'étape e) de réalisation de l'empilement découpé, une étape f) d'imprégnation de l'empilement découpé, par une phase porteuse d'ions de lithium telle que des électrolytes liquides ou un liquide ionique contenant des sels de lithium,
- il comprend, après l'étape e) ou après l'étape f), l'encapsulation de l'empilement découpé, en déposant :
   - au moins une première couche de recouvrement, de préférence choisie parmi le parylène, le parylène de type F, le polyimide, les résines epoxy, le silicone, le polyamide, la silice sol-gel, la silice organique et/ou un mélange de ceux-ci, sur la batterie, et puis
   - au moins une deuxième couche de recouvrement composée d'une matière électriquement isolante, déposée par dépôt de couches atomiques ou PECVD, HDPCVD ou ICPCVD sur ladite au moins première couche de recouvrement,
   étant entendu que la séquence d'au moins une première couche de recouvrement et d'au moins une deuxième couche de recouvrement peut être répétée z fois avec z ≥ 1,
- on réalise les deux découpes (Dₙ, D'ₙ) au travers d'au moins une majorité des anodes et des cathodes, en particulier au travers de l'ensemble des anodes et des cathodes.

L'invention a aussi pour objet un dispositif consommateur d'énergie comprenant un corps et une batterie ci-dessus, apte à alimenter en énergie électrique ce dispositif consommateur, dans lequel le support de connexion électrique de la batterie se trouve fixé sur ce corps.

L'invention a enfin pour objet un procédé de fabrication d'une batterie, ladite batterie comprenant au moins une anode (3) et au moins une cathode (1), disposées l'une au-dessus de l'autre de manière alternée, ladite batterie (100) comprenant des bords longitudinaux (103,104) et des bords latéraux (101,102),
dans lequel l'anode (3) comprend :
   - un substrat collecteur de courant,
   - au moins une couche d'anode, et
   - éventuellement une couche d'un matériau d'électrolyte ou d'un séparateur imprégné d'un électrolyte,
et la cathode (1) comprend :
   - un substrat collecteur de courant,
   - au moins une couche de cathode, et
   - éventuellement une couche d'un matériau d'électrolyte ou d'un séparateur imprégné d'un électrolyte
de sorte que la batterie comprend un empilement élémentaire successivement d'au moins une couche d'anode, d'au moins une couche d'un matériau d'électrolyte ou d'un séparateur imprégné d'un électrolyte, et d'au moins une couche de cathode,
chaque anode (3) comprenant une zone de connexion anodique, située au voisinage d'un premier bord latéral de la batterie, alors que chaque cathode (1) comprend une zone de connexion cathodique, située sur un second bord latéral de la batterie, opposé audit premier bord,
batterie dans laquelle chaque anode et chaque cathode comprend un corps principal (111, 131) respectif, séparé d'un corps secondaire (112, 132) respectif, par un espace libre (113, 133) de tout matériau d'électrode, d'électrolyte et de substrat collecteur de courant, ledit espace libre reliant les bords longitudinaux (103, 104) opposés de la batterie,
ledit procédé de fabrication comprenant :
   a) l'approvisionnement d'un empilement (I) de feuilles alternées, cet empilement comprenant des premières feuilles ou feuilles d'anode dont chacune est destinée à former une couche d'anode de plusieurs batteries, ainsi que des deuxièmes feuilles ou feuilles de cathode dont chacune est destinée à former une couche de cathode de plusieurs batteries,
      chaque feuille d'anode comprenant au moins une fente ou zone vide (34) d'anode et chaque feuille de cathode comprenant au moins une fente ou zone vide (14) de cathode, chaque fente délimitant au moins une partie dudit espace libre de tout matériau d'électrode, d'électrolyte et de substrat collecteur de courant,
   b) la réalisation d'un traitement thermique et/ou d'une compression mécanique de l'empilement de feuilles alternées précédemment approvisionné,
   c) la réalisation de deux découpes (Dₙ, D'ₙ) s'étendant au moins partiellement à l'intérieur desdites fentes, la première découpe s'étendant entre la partie latérale de la fente d'anode et l'extrémité en regard des parties longitudinales, alors que la seconde découpe s'étend entre la partie latérale de la fente de cathode et l'extrémité en regard des parties longitudinales,
ce procédé étant caractérisé en ce qu'on ménage au moins une perforation sur le trajet de chaque découpe, de manière à faciliter la réalisation de cette découpe par un outil de découpe.

### Figures

Les figures annexées, données à titre d'exemples non limitatifs, représentent différents aspects et modes de réalisation de l'invention. [Fig. 12] représente une batterie selon l'état de la technique.
[Fig. 1] est une vue en perspective des feuilles d'anode et de cathode destinées à former un empilement selon le procédé de fabrication de batteries conforme à l'invention.
[Fig. 2] est une vue de face, illustrant l'une des feuilles de la figure 1.
[Fig. 3] est une vue de face, à plus grande échelle, illustrant des fentes en forme de H ménagées dans des feuilles adjacentes ainsi que des premier et second passages ménagés dans des feuilles adjacentes.
[Fig. 4] est une vue en perspective, également à grande échelle, illustrant ces fentes en forme de H ménagées dans des feuilles adjacentes ainsi que ces premier et second passages ménagés dans des feuilles adjacentes.
[Fig. 5] est une vue de dessus, illustrant une étape de découpe réalisée sur différentes fentes ménagées dans l'empilement des figures précédentes.
[Fig. 6] est une vue de dessus, illustrant à plus grande échelle les découpes ménagées sur une fente en forme de H.
[Fig. 7] est une vue en coupe, selon la ligne VII-VII indiquée sur la figure 6.
[Fig. 8] est une vue en coupe, selon la ligne VIII-VIII indiquée sur la figure 6.
[Fig. 9] est une vue de dessus illustrant une batterie conforme à l'invention, qui est susceptible d'être obtenue notamment selon le procédé des figures précédentes.
[Fig. 10] est une vue en coupe, selon la ligne X-X indiquée sur la figure 6 illustrant une batterie conforme à l'invention, qui est susceptible d'être obtenue notamment selon le procédé des figures précédentes.
[Fig. 11] est une vue en perspective, illustrant une batterie conforme à l'invention, qui est susceptible d'être obtenue notamment selon le procédé des figures précédentes.
[Fig. 12] est une vue en perspective illustrant une batterie selon l'art antérieur.
[Fig. 13] est vue de dessus, illustrant une étape de découpe réalisée sur différentes fentes en forme de H ménagées sur une feuille d'anode ou de cathode selon une deuxième variante de l'invention et présentant les premier et second passages ménagés sur cette feuille d'anode ou de cathode selon la deuxième variante de l'invention.
[Fig. 14] est une vue de dessus, illustrant à plus grande échelle les découpes ménagées sur des fentes en forme de H selon la deuxième variante de l'invention.
[Fig. 15] est une vue en perspective, illustrant une batterie conforme à l'invention, qui est susceptible d'être obtenu notamment selon la deuxième variante de l'invention.
[Fig. 16] comprend les figures 16A, 16B et 16C. Ces figures 16A, 16B et 16C sont des vues en coupe, selon la ligne XVI-XVI indiquée sur la figure 15 illustrant une batterie conforme à l'invention, qui est susceptible d'être obtenue notamment selon le procédé des figures précédentes et dont les premier et second passages ménagés sur cette batterie sont remplis par des moyens conducteurs destinés à réaliser la connexion électrique entre les cellules de la batterie.

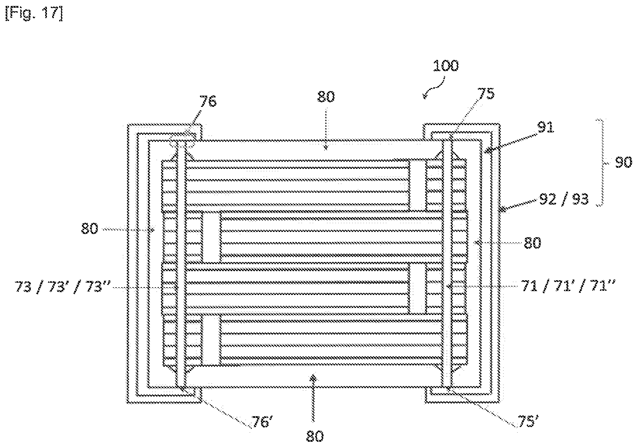

[Fig. 17] est une vue en coupe illustrant une batterie conforme à l'invention, qui est susceptible d'être notamment obtenue selon le procédé des figures précédentes, cette batterie comprenant les moyens conducteurs destinés à réaliser la connexion électrique entre les cellules de la batterie et un système d'encapsulation.
[Fig. 18] est une vue analogue à la figure 5, illustrant un procédé de fabrication d'une batterie conforme à une variante de réalisation de l'invention.
[Fig. 19] est une vue en perspective, illustrant la batterie formée à partir du procédé illustré sur la figure 18.
[Fig. 20] est une vue en coupe, analogue à la figure 16, illustrant la batterie de la figure 19.
[Fig. 21] est une vue en coupe, analogue à la figure 20, illustrant la batterie de la figure 20, laquelle inclut en outre une encapsulation et un support conducteur, tout en étant intégrée à un dispositif consommateur d'énergie.
[Fig. 22] est une vue en perspective, analogue à la première figure, illustrant un autre mode de réalisation des feuilles d'anode et des feuilles de cathode.
[Fig. 23] est une vue analogue à la figure 18, illustrant un procédé de fabrication utilisant les feuilles de la figure 22.
[Fig. 24] est une vue en coupe selon la ligne XXIV de la figure 23, illustrant une barrette formée à partir d'une découpe visible sur la figure 23.
[Fig. 25] est une vue en coupe, analogue à la figure 21, illustrant la batterie qui inclut un support conducteur selon une variante de l'invention.

### Description de l'invention

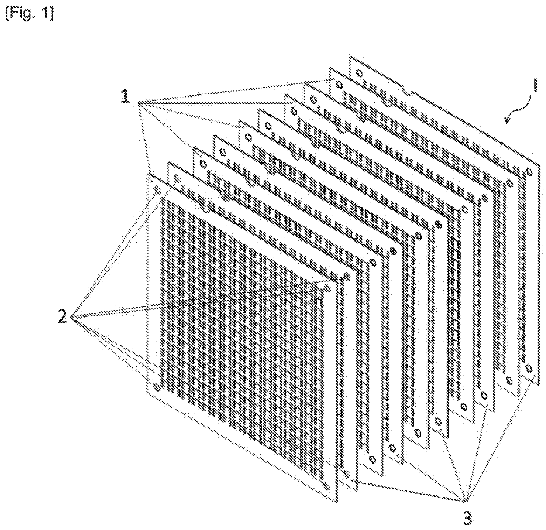

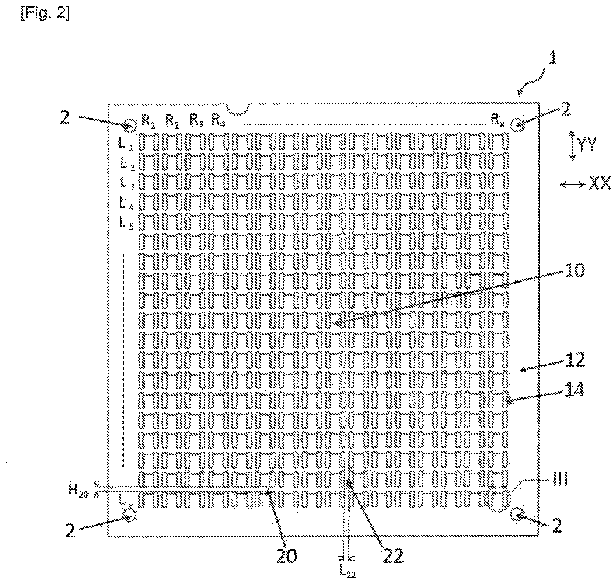

Le procédé conforme à l'invention comprend tout d'abord une étape dans laquelle on réalise un empilement I de feuilles alternées, ces feuilles étant dénommées dans ce qui suit, selon le cas, « feuilles d'anode » et « feuilles de cathode ». Comme on le verra plus en détail, chaque feuille d'anode est destinée à former l'anode de plusieurs batteries, et chaque feuille de cathode est destinée à former la cathode de plusieurs batteries. Dans l'exemple illustré sur la figure 1, on a représenté cinq feuilles de cathode 1, ainsi que cinq feuilles d'anode 3. En pratique, cet empilement est formé par un nombre plus élevé de feuilles, typiquement compris entre dix et mille. Dans un mode de réalisation avantageux, toutes ces feuilles présentent des perforations 2 à leurs quatre extrémités de manière à ce que lorsque ces perforations 2 sont superposées, toutes les cathodes et toutes les anodes de ces feuilles sont agencées spécifiquement, comme ceci sera expliqué en plus grand détail ci-après (cf. figures 1 et 2). Ces perforations 2 aux quatre extrémités des feuilles sont des mires de positionnement permettant d'aligner les feuilles lors de leur empilement.

Ces perforations 2 aux quatre extrémités des feuilles peuvent être réalisées par tout moyen approprié, notamment sur des feuilles d'anode et de cathode après fabrication ou sur des feuilles d'anode et/ou de cathode revêtues d'une couche d'électrolyte ou revêtues d'un séparateur de manière à ce que cette couche d'électrolyte ou ce séparateur soit intercalé(e) entre deux feuilles de polarité opposée, i.e. entre la feuille d'anode et la feuille de cathode.

La structure physico-chimique de chaque feuille d'anode ou de cathode, qui peut être de type connue, ne fait pas partie de l'invention et ne sera décrite que de manière succincte. Chaque feuille d'anode **3** comprend un substrat collecteur de courant anodique revêtu d'une couche active d'un matériau d'anode, ci-après couche d'anode. Chaque feuille de cathode **1** comprend un substrat collecteur de courant cathodique revêtu d'une couche active d'un matériau de cathode, dénommée ci-après couche de cathode. Chacune de ces couches actives peut être solide, et plus particulièrement de nature dense ou poreuse. Par ailleurs, afin d'éviter tout contact électrique entre deux feuilles adjacentes, à savoir, entre deux couches actives de polarités opposées, une couche d'électrolyte ou un séparateur imprégné d'un électrolyte liquide (non représenté sur la figure 1) est disposé sur au moins l'une de ces deux feuilles, à savoir, sur la couche active d'au moins l'un de ces substrats collecteurs de courant préalablement revêtu de la couche active, au contact de la couche active de la feuille en regard. La couche d'électrolyte ou le séparateur imprégné d'un électrolyte liquide, non représenté sur les figures décrivant la présente invention, est intercalé entre deux feuilles de polarité opposée, i.e. entre la feuille d'anode et la feuille de cathode. De manière plus précise, la couche d'électrolyte ou le séparateur, peut être disposé(e) sur la couche d'anode et/ou sur la couche de cathode ; la couche d'électrolyte ou le séparateur fait partie intégrante de la feuille d'anode 3 et/ou de la feuille de cathode **1** la ou le comprenant.

Une cellule élémentaire de batterie comprend successivement au moins un substrat collecteur de courant anodique, au moins une couche d'anode, au moins une couche d'un matériau d'électrolyte ou d'un séparateur imprégné d'un électrolyte, au moins une couche de cathode, et au moins un substrat collecteur de courant cathodique. Les substrats collecteurs de courant peuvent être des feuillards métalliques.

Avantageusement, les deux faces du substrat collecteur de courant anodique, respectivement cathodique, peuvent être revêtues d'une couche d'anode, respectivement d'une couche de cathode, et optionnellement d'une couche d'électrolyte ou de séparateur, disposé(e) sur la couche d'anode, respectivement sur la couche de cathode. Dans ce cas, le substrat collecteur de courant anodique, respectivement cathodique, servira de collecteur de courant pour deux cellules élémentaires adjacentes. L'utilisation de ces substrats dans les batteries permet d'accroitre le rendement de production des batteries rechargeables à forte densité d'énergie et forte densité de puissance.

On va maintenant décrire la structure mécanique de l'une des feuilles de cathode **1,** étant entendu que les autres feuilles de cathode présentent une structure identique. Par ailleurs, comme on le verra dans ce qui suit, les feuilles d'anode **3** possèdent une structure très voisine de celle des feuilles de cathode **1.**

Comme cela est visible sur la figure 2, la feuille de cathode **1** présente une forme de quadrilatère, sensiblement de type carré. Elle délimite une zone centrale **10** dite perforée, dans laquelle sont ménagées des fentes en forme de H qui vont être décrites ci-après. En référence au positionnement de ces fentes en forme de H, on définit une direction dite verticale **YY** de la feuille, qui correspond à la direction verticale de ces H, ainsi qu'une direction dite horizontale **XX** de la feuille, perpendiculaire à la direction **YY.** La zone centrale **10** est bordée par un cadre périphérique **12** qui est plein, à savoir dépourvu de fentes. La fonction de ce cadre est notamment d'assurer une manipulation aisée de chaque feuille.

Les fentes en forme de H sont réparties selon des lignes **L₁** à **L_{y},** disposées les unes au-dessous des autres, ainsi que selon des rangées **R₁** à **Rₓ** prévues les unes à côté des autres. A titre d'exemples non limitatifs, dans le cadre de la fabrication de micro-batteries de type composant montable en surface (ci-après CMS), les feuilles d'anode et de cathode employées peuvent être des plaques de 100 mm x 100 mm. De manière typique, le nombre de lignes de ces feuilles est compris entre 10 et 500, alors que le nombre de rangées est compris entre 10 et 500. En fonction de la capacité souhaitée de la batterie, ses dimensions peuvent varier et le nombre de ligne et de rangées par feuilles d'anode et de cathode peut être adapté en conséquence. Les dimensions des feuilles d'anode et de cathode employées peuvent être modulées en fonction des besoins. Comme montré en figure 2, deux lignes adjacentes sont séparées par des ponts de matière **20,** dont on note **H₂₀** la hauteur, laquelle est comprise entre 0,05 mm et 5 mm. Deux rangées adjacentes sont séparées par des bandes de matières **22,** dont on note **L₂₂** la largeur, laquelle est comprise entre 0,05 mm et 5 mm. Ces ponts et bandes de matières des feuilles d'anode et de cathode leur confèrent une rigidité mécanique suffisante pour qu'elles puissent être manipulées aisément.

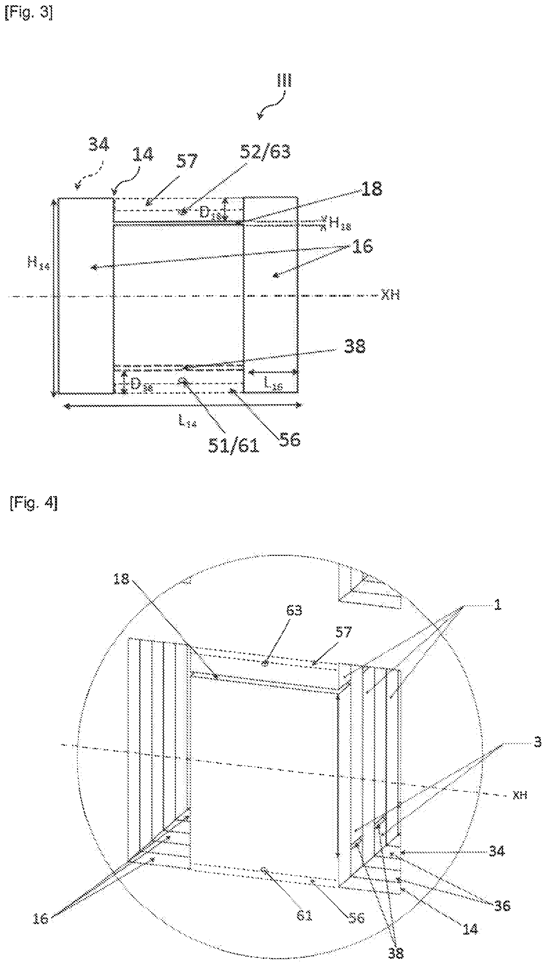

Les fentes **14** sont traversantes, à savoir qu'elles débouchent sur les faces respectivement supérieures et inférieures de la feuille. Les fentes **14** peuvent être réalisées de manière connue en soi, directement sur le substrat, avant tout dépôt de matériaux d'anode ou de cathode par gravure chimique, par électroformage, par découpe laser, par microperforation ou par étampage. Ces fentes peuvent aussi être réalisées sur des substrats revêtus de matériaux d'anode ou de cathode, sur des feuilles d'anode ou de cathode revêtues d'une couche d'électrolyte ou d'un séparateur, de manière connue en soi, par exemple par découpe laser, par découpe laser femtoseconde, par microperforation ou par étampage. Les fentes **14,** réalisées dans l'ensemble des cathodes, sont superposées comme le montre notamment la figure 3.

On va maintenant décrire l'une des fentes **14** en forme de H, étant entendu que l'ensemble des découpes de la feuille de cathode est identique. La fente **14** est formée par deux évidements principaux verticaux et parallèles **16,** lesquels sont reliés dans leur partie supérieure par un canal horizontal **18,** de préférence perpendiculaire aux deux évidements principaux verticaux **16.** On note :
- **H₁₄** la hauteur de l'ensemble de la fente, qui est typiquement comprise entre 0,25 mm et 10 mm ;
- **L₁₄** sa largeur, qui est typiquement comprise entre 0,25 mm et 10 mm ;
- **L₁₆** la largeur de chaque évidement principal, qui est typiquement comprise entre 0,02 mm et 5 mm ;
- **H₁₈** la hauteur de chaque canal, qui est typiquement comprise entre 0,01 mm et 0,5 mm ;
- **D₁₈** la différence de hauteurs entre le sommet des évidements principaux et le sommet du canal, qui est typiquement comprise entre 0,05 mm et 2 mm.

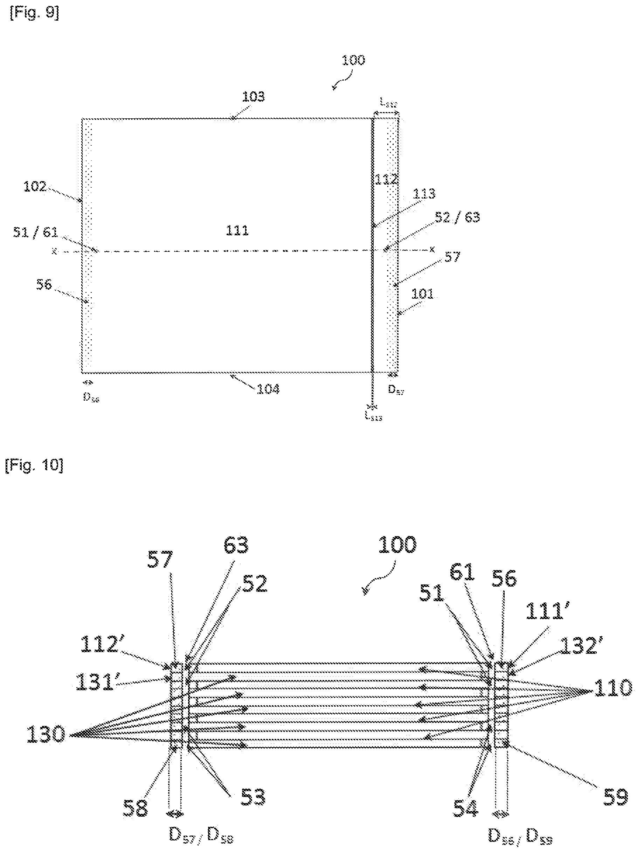

Par ailleurs, comme représenté en particulier en figure 10, au moins un premier trou débouchant **51** est réalisé dans le corps principal et un second trou débouchant **52** est réalisé dans le corps secondaire.

Les trous débouchants **51 / 52 / 53 / 54** sont aussi dénommés traversants, à savoir qu'ils débouchent sur les faces respectivement supérieurs et inférieurs de la feuille. Ces trous débouchants peuvent être réalisés de manière connue en soi, directement sur les feuilles d'anode et/ou de cathode avant empilement ou après empilement de feuilles alternées comprenant des premières feuilles ou feuilles d'anode dont chacune est destinée à former une couche d'anode de plusieurs batteries, ainsi que des deuxièmes feuilles ou feuilles de cathode dont chacune est destinée à former une couche de cathode de plusieurs batteries. Les trous débouchants peuvent être réalisés par gravure chimique, par électroformage, par découpe laser, par microperforation ou par étampage.

Les premiers **51** et deuxièmes **52** trous débouchants, réalisés dans l'ensemble des cathodes, sont superposés comme le montre notamment la figure 3. Les trous débouchants **53** et **54** sont visibles sur la figure 10.

Chaque anode est également pourvue de différentes lignes et rangées de fentes **34,** prévues en même nombre que les fentes **14.** Comme le montre notamment la figure 4, la structure de chaque fente **34** est sensiblement analogue à celle de chaque fente **14,** à savoir que cette fente **34** comprend deux évidements principaux verticaux **36,** reliés par un canal **38.** Les dimensions des évidements principaux verticaux **36** sont identiques à celles des évidements principaux verticaux **16** et, de manière analogue, les dimensions des canaux **38** sont analogues à celles des canaux **18.**

En vue de dessus, les évidements principaux verticaux **36** sont superposés avec ceux **16.** La seule différence, entre les fentes **14** et **34,** réside dans le fait que les canaux **38** sont prévus en partie inférieure. Comme le montre notamment la figure 3, les canaux **18** et **38** sont mutuellement symétriques en vue de dessus, par rapport à l'axe médian des H, lequel est noté **XH.**

Par ailleurs, comme représenté en particulier en figure 3, au moins un premier trou débouchant **53** est réalisé dans le corps principal et un second trou débouchant **54** est réalisé dans le corps secondaire.

Avantageusement, le premier trou débouchant **51** réalisé dans le corps principal de la cathode, s'étend dans le prolongement du second trou débouchant **54** réalisé dans le corps secondaire de l'anode, de sorte que ces trous **51 / 54** s'étendent les uns dans le prolongement des autres, et forment un premier passage débouchant **61** qui traverse de part en part la batterie. De plus, le premier trou débouchant **53** réalisé dans le corps principal de l'anode, s'étend dans le prolongement du second trou débouchant **52** réalisé dans le corps secondaire de la cathode, de sorte que ces trous **53** / **52** s'étendent les uns dans le prolongement des autres, et forment un second passage débouchant **63** qui traverse de part en part la batterie.

Avantageusement les seconds trous débouchants **52 /54** sont réalisés à une certaine distance des canaux **18** et **38** des fentes afin d'éviter tout risque de court-circuit tout en conservant la tenue mécanique de l'empilement. Cette distance est avantageusement choisie en fonction de la nature des feuilles d'anode et de cathode, notamment de la nature du substrat collecteur de courant employé, de son épaisseur et de sa rigidité. La présence de ces trous débouchants au sein de l'empilement ne doit pas dégrader la tenue mécanique de l'empilement. Les dimensions des trous débouchants peuvent être modulées en fonction des besoins.

Avantageusement les premiers et seconds trous débouchants **53 / 52 / 51 /54** sont réalisés à une certaine distance des bords latéraux **101** et **102** de la batterie, délimitant un ruban de matière **56 /57 / 58 /59** comme cela sera détaillé ci-après. Avantageusement, les seconds trous débouchants respectivement **52 / 54** sont réalisés dans les corps secondaires respectifs 112 **/ 132** à une certaine distance des espaces libres respectifs **113 / 133** de la batterie, délimitant un second ruban de matière non représenté sur les figures. On suppose que l'empilement, décrit ci-dessus, est soumis à des étapes visant à assurer sa stabilité mécanique globale. Ces étapes, de type connu en soi, incluent notamment le thermopressage des différentes couches. Comme on va le voir ci-dessous, cet empilement permet la formation de batteries individuelles, dont le nombre est égal au produit entre le nombre de lignes **Y** et le nombre de rangées **X.**

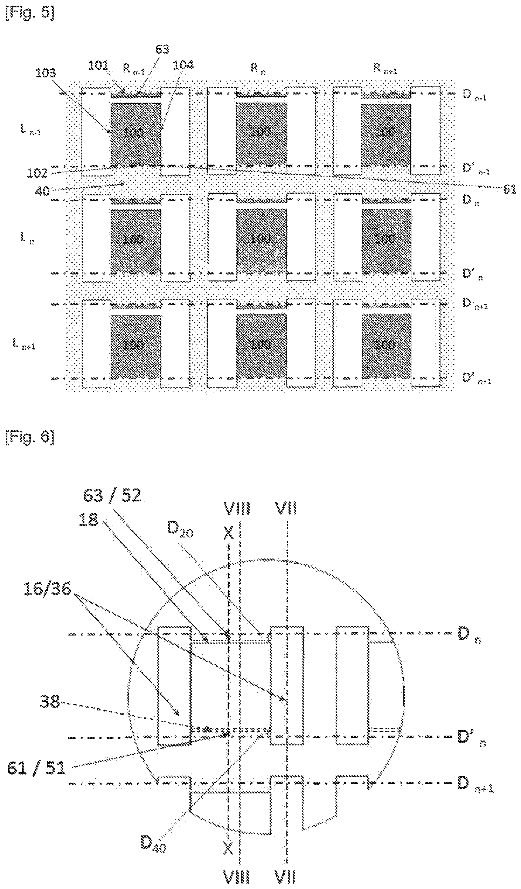

À cet effet, en référence à la figure 5, on a illustré trois lignes **Lₙ₋₁** à **Lₙ₊₁,** ainsi que trois rangées **Rₙ₋₁** à **Rₙ₊₁.** Conformément à l'invention, on réalise deux découpes **Dₙ** et **D'ₙ** par ligne de fentes. Chaque découpe, qui s'effectue de manière traversante, à savoir qu'elle s'étend sur l'ensemble de la hauteur de l'empilement, est réalisée de manière connue en soi. À titre d'exemples non limitatifs, on citera la découpe par sciage, notamment la découpe en dés, la découpe par guillotine ou encore la découpe par laser.

Comme le montre notamment la figure 6, qui est une vue à plus grande échelle de l'une des fentes de la figure 5, chaque découpe est réalisée entre un canal respectif et l'extrémité en regard du H. On suppose qu'on néglige l'épaisseur de ladite découpe. Dans ces conditions, en référence à cette figure 6, à titre d'exemples non limitatifs, on note :
- la distance **D₂₀** entre la découpe Dₙ et la face en regard du canal horizontal **18** est comprise entre 0,05 mm et 2 mm, étant entendu que cette distance **D₂₀** est inférieure ou égale à **D₁₈** ;
- la distance **D₄₀** entre la découpe D'ₙ et la face en regard du canal horizontal **38,** comprise entre 0,05 mm et 2 mm, étant entendu que cette distance **D₄₀** est inférieure ou égale à **D₃₈.**

En référence à nouveau à la figure 5, chaque batterie finale est délimitée, en haut et en bas, par les deux découpes et, à droite et à gauche, par les faces intérieures des évidements principaux verticaux du H. Sur cette figure 5 on a hachuré les batteries **100** une fois découpées par les lignes de découpe **Dₙ** et **D'ₙ,** on a illustré avec des points les zones **40** des feuilles de l'empilement, qui ne forment pas les batteries, alors que le volume des fentes est laissé en blanc. Par ailleurs, sur la figure 5, sont illustrés les premiers et seconds passages **61 / 63** qui traversent de part en part la batterie ; passages qui seront ultérieurement remplis par des moyens conducteurs faisant saillie au niveau des surfaces à la fois supérieure et inférieure de la batterie. Ces premiers et seconds passages **61** / **63** sont, de préférence, sensiblement perpendiculaires aux feuilles de cathode et aux feuilles d'anode constitutives de l'empilement.

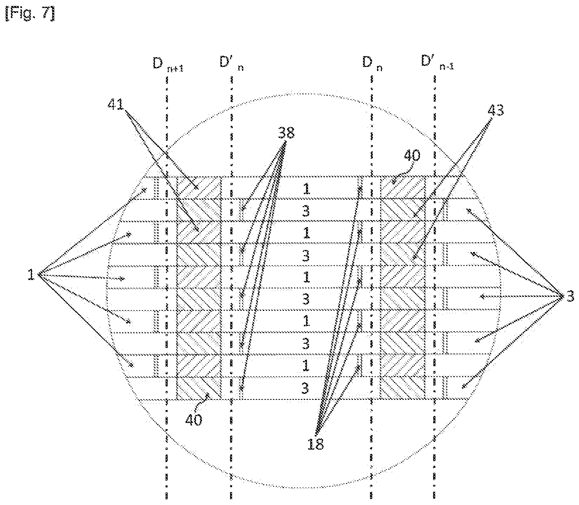

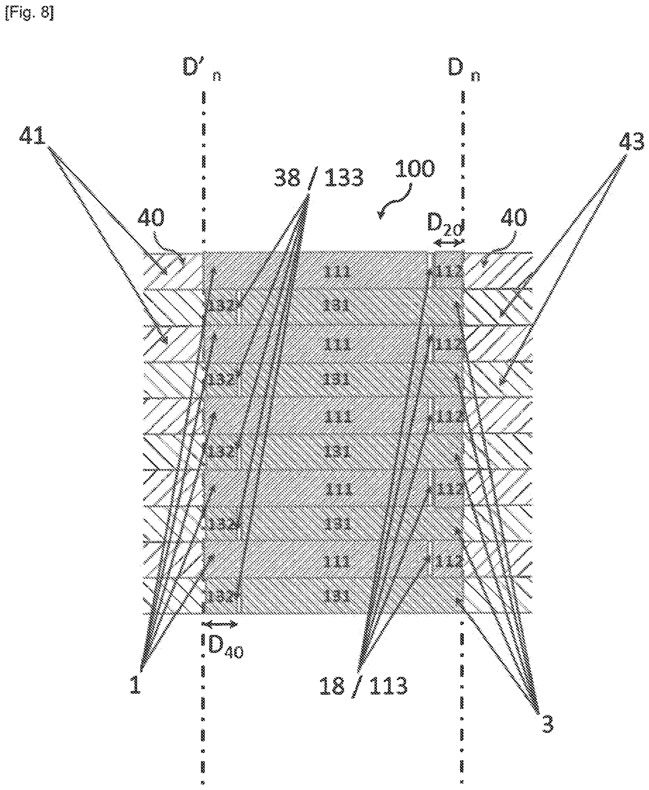

Les figures 7 et 8 sont des vues en coupe, prises selon des lignes de coupe parallèle. La coupe **VII-VII** s'étend à travers les évidements principaux verticaux du H, alors que la coupe **VIII-VIII** traverse la matière. Sur la figure 7, on a référencé les zones **40,** illustrées également en figure 5, lesquelles correspondent à des chutes de matière, notamment des chutes de matériaux d'anodes **43** et de matériaux de cathodes **41.** Sur la figure 8 on note que les découpes sont réalisées à la fois au travers des anodes et des cathodes, à savoir à une distance **D₂₀** des canaux des fentes en forme de H de manière à avoir pour chaque cathode **1,** respectivement chaque anode **3** de la batterie **100** un corps principal **111,** respectivement **131,** séparé d'un corps secondaire **112,** respectivement **132,** par un espace libre de tout matériau d'électrode, d'électrolyte et/ou de substrat collecteur de courant **113,** respectivement **133.** Il s'agit là d'une caractéristique particulièrement avantageuse de l'invention, puisque cela permet d'améliorer la qualité de la découpe au regard de l'art antérieur et d'éviter la présence de court-circuit au niveau des bords latéraux de la batterie.

La demande WO 2016/001584 décrit des empilements de plusieurs cellules élémentaires, constituées de feuilles d'anode et de cathode empilées de manière alternée et décalée latéralement (cf. figure 12), encapsulés dans un système d'encapsulation pour assurer la protection de la cellule de la batterie vis-à-vis de l'atmosphère. La découpe de ces empilements encapsulés permettant d'obtenir des batteries unitaires, avec des connexions anodique et cathodique à nu, est réalisée selon un plan de coupe traversant une succession alternée d'électrode et de système d'encapsulation. De par la différence de densité existant entre l'électrode et le système d'encapsulation de la batterie de l'art antérieur, la découpe réalisée selon ce plan de coupe induit un risque d'arrachement du système d'encapsulation aux abords du plan de coupe, et ainsi la création de court-circuits. Dans l'art antérieur, lors de l'encapsulation, la couche d'encapsulation remplit les interstices de l'empilement des feuilles portant des découpes en forme de U. Cette couche d'encapsulation introduite au niveau de ces interstices est épaisse et n'adhère pas très bien à l'empilement induisant ce risque d'arrachement du système d'encapsulation lors de la découpe ultérieure.

Selon la présente invention, ce risque est supprimé avec l'emploi de feuilles portant des découpes en forme de H, car la structure mécanique thermopressée en forme de H est extrêmement rigide aux abords de la découpe, du fait de la superposition alternée de feuilles de cathode et d'anode. L'utilisation d'une telle structure rigide, avec l'emploi de feuilles portant des découpes en forme de H, permet de réduire le nombre de défauts lors des découpes, d'accroitre la vitesse de découpe et ainsi d'améliorer le rendement de production des batteries.

Selon l'invention, les découpes **D'ₙ** et **Dₙ** sont effectuées au travers des anodes et des cathodes de densité comparable induisant une découpe propre de meilleure qualité. De plus la présence d'un espace libre de tout matériau d'électrode, d'électrolyte et/ou de substrat collecteur de courant empêche tout risque de court-circuit.

En référence désormais aux figures 9 à 11, on a illustré l'une **100** des batteries conformes à l'invention. On note **X100** et **Y100** les axes médians respectivement longitudinal et latéral de cette batterie. On note **101** et **102** les bords latéraux, **103** et **104** les bords longitudinaux de cette batterie. On note par ailleurs **110** chaque cathode, et **130** chaque anode. Le nombre de ces cathodes, qui est identique au nombre de ces anodes, correspond au nombre de feuilles de cathode et de feuilles d'anode de l'empilement ci-dessus.

Comme le montre la figure 9, à savoir en vue de dessus, les espaces libres des cathodes sont superposés. De plus, selon cette même vue de dessus, les espaces libres des anodes sont superposés. Enfin, selon cette même vue de dessus, les espaces libres des cathodes et des anodes ne sont pas confondus, i.e. non mutuellement superposés. Cela est notamment représenté, à titre d'exemple, en figure 10.

L'espace libre **113** relie les bords longitudinaux opposés de la batterie qui sont représentés comme supérieur et inférieur sur la figure 9. Cet espace libre s'étend entre les bords longitudinaux opposés de la batterie séparant, pour chaque anode et chaque cathode, un corps principal d'un corps secondaire.

Chaque cathode **110** comprend un corps principal **111,** un corps secondaire **112** situé sur un premier bord latéral **101,** ainsi qu'un espace libre de tout matériau d'électrode, d'électrolyte et/ou de substrat collecteur de courant **113.** Ce dernier, dont la largeur correspond à celle du canal **18** de la fente **14** décrite ci-dessus, s'étend entre les bords longitudinaux **103** et **104.** De manière analogue, chaque anode **130** comprend un corps principal **131,** ainsi qu'un corps secondaire **132** situé sur le bord latéral **102,** opposé à celui **101.** Le corps principal **131** et le corps secondaire **132** sont séparés par un espace libre **133** de tout matériau d'électrode, d'électrolyte et/ou de substrat collecteur de courant, reliant les bords **103** et **104,** i.e. s'étendant entre les bords longitudinaux **103** et **104.** Les 2 espaces libres **113** et **133** sont mutuellement symétriques, par rapport à l'axe médian **Y100.**

La largeur **L₁₁₃** de chaque espace libre **113** correspond à la largeur du canal **18,** appartenant à la fente décrite dans les figures précédentes. Par ailleurs, la largeur **L₁₁₂** de chaque corps secondaire **112** correspond à la distance D₂₀, telles que décrites en référence à la figure 6 ou à la figure 8.

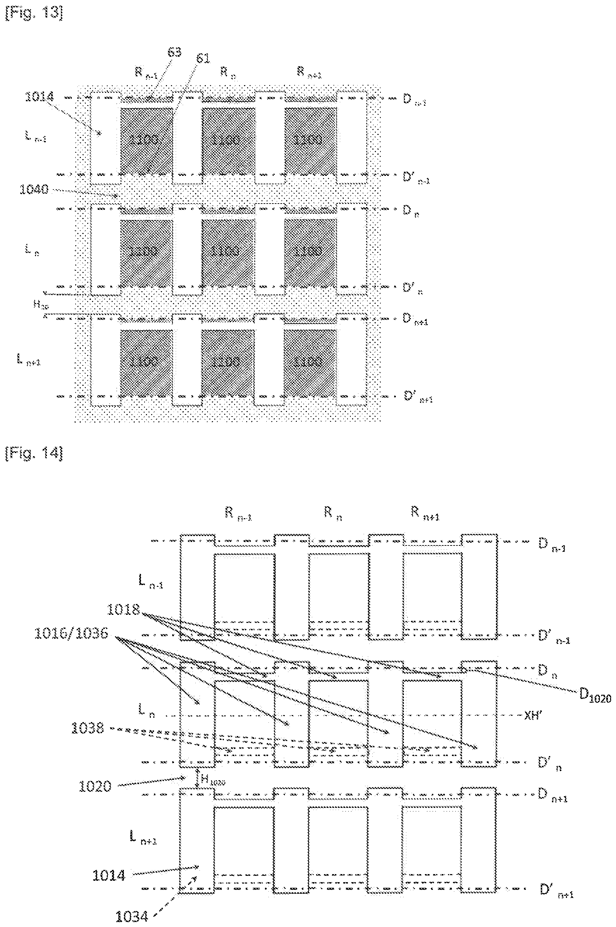

La figure 13 illustre une variante supplémentaire de l'invention. Sur cette figure 13 les éléments mécaniques analogues à ceux des figures 1 à 11 illustrant le premier mode de réalisation, y sont affectés des mêmes numéros de référence augmentée du nombre 1000.

Cette seconde variante de réalisation diffère de la première variante essentiellement en ce que les fentes **1014** en forme de H sont réparties selon des lignes **L₁** à **L_{y},** disposées les unes au-dessous des autres, ainsi que selon des rangées **R₁** à **Rₓ** prévues les unes à côté des autres. De la sorte au moins un des évidements principaux verticaux **1016** de la fente positionnée en rangée Rₙ est confondu avec au moins l'un des évidements principaux verticaux **1016** de la fente adjacente positionnée en rangée Rₙ₋₁ et/ou Rₙ₊₁. Dans ce cas, les deux rangées adjacentes ne sont pas séparées par des bandes de matières. Comme montré en figure 13, deux lignes adjacentes sont séparées par des ponts de matière **1020,** dont on note **H₁₀₂₀** la hauteur, laquelle est comprise entre 0,05 mm et 5 mm. Ces ponts de matière confèrent aux feuilles d'anode et de cathode une rigidité mécanique suffisante pour qu'elles puissent être manipulées aisément.

Dans cette seconde variante de l'invention, les fentes **1014** en forme de H peuvent être, de préférence, les mêmes que dans la première variante. La fente **1014** est, de préférence, formée par deux évidements principaux verticaux et parallèles **1016,** lesquels sont reliés dans leur partie supérieure par un canal horizontal **1018,** de préférence perpendiculaire aux deux évidements principaux verticaux **1016.**

Chaque cathode est pourvue de différentes lignes et rangées de fentes **1014.** Chaque anode est également pourvue de différentes lignes et rangées de fentes **1034,** prévues en même nombre que les fentes **1014.**

La structure de chaque fente **1034** est sensiblement analogue à celle de chaque fente **1014,** à savoir que cette fente **1034** comprend deux évidements principaux verticaux **1036,** reliés par un canal **1038.** Les dimensions des évidements principaux verticaux **1036** sont identiques à celles des évidements principaux verticaux **1016** et, de manière analogue, les dimensions des canaux **1038** sont analogues à celles des canaux **1018.**

En vue de dessus, les évidements principaux verticaux **1036** sont superposés avec les évidements principaux verticaux **1016.** La seule différence, entre les fentes **1014** et **1034,** réside dans le fait que les canaux **1038** sont prévus en partie inférieure. Comme le montre notamment la figure 14, les canaux **1018** et **1038** sont mutuellement symétriques en vue de dessus, par rapport à l'axe médian des H, lequel est noté XH'.

On suppose que l'empilement des feuilles d'anode et de cathode, décrit ci-dessus, est soumis à des étapes visant à assurer sa stabilité mécanique globale. Ces étapes, de type connu en soi, incluent notamment le thermopressage des différentes couches. Comme on va le voir ci-dessous, cet empilement permet la formation de batteries individuelles, dont le nombre est égal au produit entre le nombre de lignes Y et le nombre de rangées X.

À cet effet, en référence à la figure 14, on a illustré trois lignes **Lₙ₋₁** à **Lₙ₊₁,** ainsi que trois rangées **Rₙ₋₁** à **Rₙ₊₁.** Conformément à l'invention, on réalise deux découpes **Dₙ** et **D'ₙ** par ligne de fentes. Chaque découpe, qui s'effectue de manière traversante, à savoir qu'elle s'étend sur l'ensemble de la hauteur de l'empilement, est réalisée de manière connue en soi. À titre d'exemples non limitatifs, on citera la découpe par sciage, notamment la découpe en dés, la découpe par guillotine ou encore la découpe par laser.

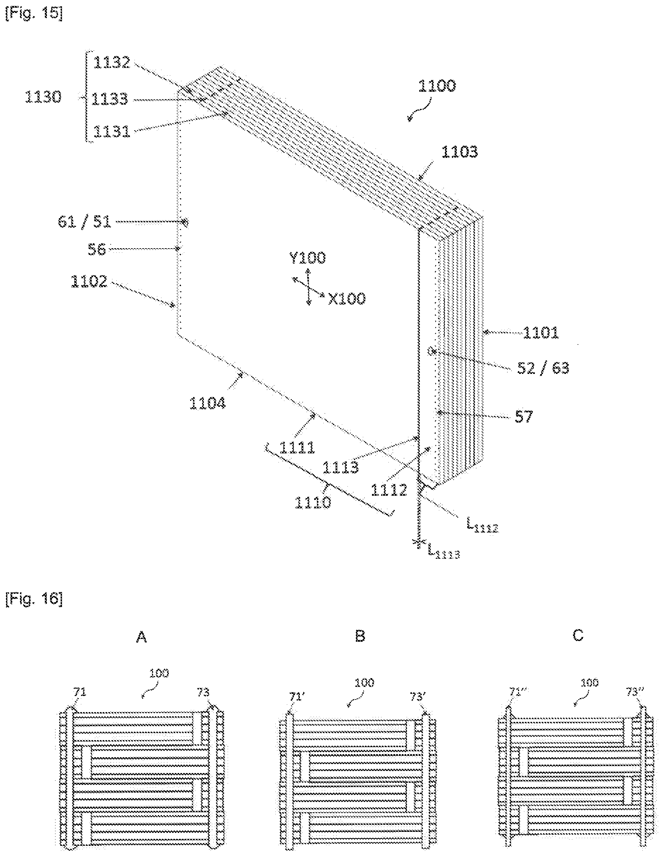

Chaque découpe est réalisée entre un canal respectif et l'extrémité en regard du H. On suppose qu'on néglige l'épaisseur de ladite découpe. Les découpes sont réalisées à la fois au travers des anodes et des cathodes, à savoir à une distance D₁₀₂₀ des canaux des fentes en forme de H de manière à avoir pour chaque cathode **1110,** respectivement chaque anode **1130** de la batterie **1100,** un corps principal **1111,** respectivement **1131,** séparé d'un corps secondaire **1112,** respectivement **1132,** par un espace libre de tout matériau d'électrode, d'électrolyte et/ou de substrat collecteur de courant **1113,** respectivement **1133,** comme cela est illustré en figure 15. Il s'agit là d'une caractéristique particulièrement avantageuse de l'invention, puisque cela permet d'améliorer la qualité de la découpe au regard de l'art antérieur et d'éviter la présence de court-circuit au niveau des bords latéraux de la batterie. Chaque batterie finale **1100** est délimitée, en haut et en bas, par les deux découpes et, à droite et à gauche, par les faces intérieures des évidements principaux verticaux du H. Sur la figure 13 on a hachuré les batteries **1100** une fois découpées par les lignes de découpe **Dₙ** et **D'ₙ,** on a illustré avec des points les zones **1040** des feuilles de l'empilement, qui ne forment pas les batteries, alors que le volume des fentes est laissé en blanc.

Selon l'invention, les découpes **D'ₙ** et **Dₙ** sont effectuées au travers des anodes et des cathodes de densité comparable induisant une découpe propre de grande qualité. De plus la présence d'un espace libre de tout matériau d'électrode, d'électrolyte et/ou de substrat collecteur de courant empêche tout risque de court-circuit.

Comme représenté en figure 15, chaque cathode **1110** comprend un corps principal 1111, un corps secondaire **1112** situé sur un premier bord latéral **1101,** ainsi qu'un espace **1113** libre de tout matériau d'électrode, d'électrolyte et/ou de substrat collecteur de courant. Ce dernier, dont la largeur correspond à celle du canal **1018** de la fente **1014** décrite ci-dessus, s'étend entre les bords longitudinaux. De manière analogue, chaque anode **1130** comprend un corps principal **1131,** ainsi qu'un corps secondaire **1132** situé sur le bord latéral **1102,** opposé à celui **1101.** Le corps principal **1131** et le corps secondaire **1132** sont séparés par un espace libre **1133** de tout matériau d'électrode, d'électrolyte et/ou de substrat collecteur de courant, reliant les bords longitudinaux, i.e. s'étendant entre les bords longitudinaux **1103** et **1104.** Les deux espaces libres **1113** et **1133** sont mutuellement symétriques, par rapport à l'axe médian **Y100.**

La largeur **L₁₁₁₃** de chaque espace libre **1113** correspond à la largeur du canal **1018,** appartenant à la fente décrite dans les figures précédentes. Par ailleurs, la largeur **L₁₁₁₂** de chaque corps secondaire **1112** correspond à la distance **D₁₀₂₀,** telles que décrites précédemment.

La batterie **1100** obtenue selon la deuxième variante de l'invention est en tout point identique à celle obtenue selon la première variante de l'invention quand bien même l'agencement des fentes **1014** est différent.

Dans une troisième variante de l'invention qui n'est pas représentée sur les figures, les fentes **14** / **1014** en forme de H peuvent être réparties selon des lignes **L₁** à **L_{y},** disposées les unes au-dessous des autres, ainsi que selon des rangées **R₁** à **Rₓ** prévues les unes à côté des autres. De la sorte, sur une même feuille d'anode et/ou de cathode, les fentes **14** / **1014** en forme de H sont disposées selon la première et la seconde variante de l'invention, sur les feuilles d'anode et/ou de cathode, de manière à conserver une rigidité mécanique suffisante pour que ces feuilles puissent être manipulées aisément et à ce que l'empilement puisse définir avantageusement un maximum de batteries unitaires.

La batterie **1100** obtenue selon la troisième variante de l'invention est en tout point identique à celle obtenue selon les première et/ou deuxième variantes selon l'invention quand bien même l'agencement des fentes **14** / **1014** sur les feuilles d'anode et/ou de cathode est différent.

La comparaison entre les figures 11 et 12 permet de mettre en exergue des avantages de l'invention. En effet, sensiblement tout le volume global de la batterie est occupé par de la matière utile, i.e. qui contribue au fonctionnement électrochimique de la batterie **100.** En effet, seuls les deux espaces libres **133 / 1133,** de très faible dimension, ne peuvent être considérés comme de la matière utile. À cet égard, en référence à la figure 10, on note que les faces libres **112'** des corps secondaires de cathode affleurent les faces libres **131'** du corps principal des anodes, alors que les faces libres **132'** des corps secondaires d'anode affleurent les faces libres **111'** du corps principal des cathodes. En d'autres termes, les bords latéraux opposés de la batterie conforme à l'invention, comprenant des matériaux d'électrode, sont sensiblement continus, par comparaison avec ceux de l'art antérieur illustré en figure 12, lesquelles sont discontinus du fait de la présence des retraits.

La « face libre du corps secondaire » correspond à la face appartenant au corps secondaire qui est opposée au corps principal. La « face libre du corps principal » correspond à la face appartenant au corps principal qui est opposée au corps secondaire.

En référence à la figure 10, on note que :
- le premier trou débouchant **51** réalisé dans le corps principal de la cathode, s'étend dans le prolongement du second trou débouchant **54** réalisé dans le corps secondaire de l'anode, de sorte que ces trous **51** / **54** s'étendent les uns dans le prolongement des autres, et forment un premier passage débouchant **61** qui traverse de part en part la batterie, et que
- le premier trou débouchant **53** réalisé dans le corps principal de l'anode, s'étend dans le prolongement du second trou débouchant **52** réalisé dans le corps secondaire de la cathode, de sorte que ces trous **53** / **52** s'étendent les uns dans le prolongement des autres, et forment un second passage débouchant **63** qui traverse de part en part la batterie.

Avantageusement le second trou débouchant **52** est réalisé dans le corps secondaire de la cathode, à une certaine distance **D₅₇** de l'espace libre **113** (correspondant au canal **18** de la fente **14)** afin d'éviter tout risque de court-circuit. De manière identique, le second trou débouchant est **54** réalisé dans le corps secondaire de l'anode, à une certaine distance **D₅₉** de l'espace libre **133** (correspondant au canal **38** de la fente **34)** afin d'éviter tout risque de court-circuit.

Avantageusement les premiers et seconds trous débouchants **53 / 52 / 51 /54** sont réalisés à une certaine distance des bords latéraux **101** et **102** de la batterie, délimitant un ruban de matière **56 /57 / 58 /59.**

On note :
- D₅₆, la largeur du ruban de matière **56,** qui correspond à la distance entre la face libre **111'** de la batterie **100** selon l'invention et la face en regard du premier trou débouchant **51** réalisé dans le corps principal de la cathode ; cette distance **D₅₆** est comprise entre 0,04 mm et 1,95 mm, étant entendu que cette distance **D₅₆** est sensiblement égale à la distance **D₅₉,** et est inférieure à la largeur du corps secondaire anodique ;
- **D₅₇,** la largeur du ruban de matière **57,** qui correspond à la distance entre la face libre **112'** de la batterie **100** selon l'invention et la face en regard du second trou débouchant **52** réalisé dans le corps secondaire de la cathode, cette distance **D₅₇** est comprise entre 0,04 mm et 1,95 mm, étant entendu que cette distance D₅₇ est sensiblement égale à la distance **D₅₈,** et est inférieure à la largeur du corps secondaire cathodique,

- **D₅₈,** la largeur du ruban de matière **58,** qui correspond à la distance entre la face libre **131'** de la batterie **100** selon l'invention et la face en regard du premier trou débouchant **53** réalisé dans le corps principal de l'anode, cette distance **D₅₈** est comprise entre 0,04 mm et 1,95 mm, étant entendu que cette distance **D₅₈** est sensiblement égale à la distance **D₅₇,**
- **D₅₉,** la largeur du ruban de matière **59,** qui correspond à la distance entre la face libre **132'** de la batterie **100** selon l'invention et la face en regard du second trou débouchant **52** réalisé dans le corps secondaire de l'anode, cette distance **D₅₉** est comprise entre 0,04 mm et 1,95 mm, étant entendu que cette distance **D₅₉** est sensiblement égale à la distance **D₅₆.**

Les premier et second passages **61 /63** ménagés sur la batterie selon l'invention, sont remplis par des moyens conducteurs destinés à réaliser la connexion électrique entre les cellules de la batterie comme représenté en figures 16A, 16B et 16C. Ces moyens conducteurs font saillie au niveau des surfaces supérieure et inférieure de la batterie.

Les moyens conducteurs peuvent être obtenus à partir de matériaux conducteurs électriques. Avantageusement, le coefficient WVTR de ces moyens conducteurs est extrêmement faible ; ces moyens conducteurs sont étanches. Ils sont en contact intime avec les zones de connexion électrique de l'empilement.

A titre d'exemple, les moyens conducteurs peuvent être:
- une barre formée d'un matériau conducteur électrique, tel qu'un verre conducteur ou un métal introduit à l'état fondu ou par tout moyen adapté dans le passage. Au terme de sa solidification, ce matériau forme la barre précitée dont les deux extrémités opposées définissent, de préférence, des têtes de fixation comme cela est représenté en figure 16A,
- une tige métallique à ajustement serré, dont les deux extrémités opposées définissent, de préférence, des têtes de fixation, comme cela est représenté en figure 16B,
- une tige métallique entourée d'un matériau fourreau conducteur électrique, le fourreau pouvant être obtenu à partir d'un verre ou d'un métal introduit à l'état fondu ou par tout moyen adapté dans le passage. Au terme de sa solidification, ce matériau forme la tige métallique entourée d'un matériau fourreau conducteur électrique précitée dont les deux extrémités opposées définissent, de préférence, des têtes de fixation comme cela est représenté en figure 16C.

Le sommet de chacune de ces têtes de fixation ou chacune des extrémités opposées des moyens conducteurs pourra définir une zone de connexion électrique, à savoir une zone de connexion anodique **75 / 75'** ou cathodique **76 / 76'** de la batterie selon l'invention, de manière à ce que la batterie comprenne au moins une zone de connexion anodique **75** / **75'** et au moins une zone de connexion cathodique **76** / **76'.**

La conductivité du verre conducteur peut être obtenue par ajout dans le verre de particules d'or, de nickel, de chrome, d'alliage nickel-chrome, de tungstène, de molybdène, de graphite, de carbures ou encore de nitrures.

Ces connexions électriques sont étanches et ont un faible taux de transmission de la vapeur d'eau (appelé aussi perméance à la vapeur d'eau, et en anglais Water Vapor Transmission Rate et abrégé WVTR). Ce taux dépend notamment des matériaux utilisés et de leur mode de fabrication. La mesure de la perméabilité ou de la perméance à la vapeur d'eau peut se faire à l'aide d'une méthode qui fait l'objet du US 7,624,621 et qui est également décrite dans la publication « Structural properties of ultraviolet cured polysilazane gas barrier layers on polymer substrates » par A. Mortier et al., parue dans la revue Thin Solid Films 6+550 (2014) 85-89. Plus le coefficient WVTR est faible plus le système d'encapsulation est étanche.

La « face libre du corps secondaire » correspond à la face appartenant au corps secondaire qui est opposée au corps principal.

La « face libre du corps principal » correspond à la face appartenant au corps principal qui est opposée au corps secondaire.

En outre, la présence d'espaces libres sur chaque couche d'anode, respectivement de cathode de la batterie permet de s'affranchir de l'utilisation de tout système d'encapsulation, i.e. de tout matériau isolant, tel que du parylène au sein de la batterie, ces espaces libres jouant le rôle d'isolant électrique. Les étapes finales de fabrication de batteries, telles que l'encapsulation, en sont facilitées. Il n'est plus nécessaire, comme dans l'art antérieur et illustré en figure 12, d'isoler les régions en retrait **210", 230"** au sein de la batterie, i.e. de remplir les interstices de la structure de l'art antérieur avec un système d'encapsulation, et de remplir l'espace présent dans les découpes en forme de U positionnées façon tête bêche et décalés par un système d'encapsulation pour éviter tout court-circuit. L'utilisation d'une structure rigide selon l'invention, avec l'emploi de feuilles portant des découpes en forme de H, permet de faciliter l'encapsulation et de réduire les épaisseurs d'encapsulation au regard de l'art antérieur. Des systèmes d'encapsulation de type multicouche avec des couches plus fines et plus rigides que celles de l'art antérieur peuvent être envisagés.

Avantageusement, après l'étape d'empilement des feuilles d'anode et de cathode, l'empilement obtenu est assemblé par traitement thermique et ou compression mécanique.

Avantageusement, après l'étape d'empilement des feuilles d'anode et de cathode, le traitement thermique de l'empilement, permettant l'assemblage de la batterie, est réalisé à une température comprise entre 50°C et 500°C, de préférence à une température inférieure à 350 °C, et/ou la compression mécanique de l'empilement des feuilles d'anode et de cathode à assembler est réalisée à une pression comprise entre 10 et 100 MPa, de préférence entre 20 et 50 MPa. Dans un mode de réalisation particulier, il est avantageux, après l'étape d'empilement et de traitement thermique de ce dernier, de réaliser le premier passage débouchant **61** et le second passage débouchant **63** comme indiqué précédemment, puis d'introduire un moyen conducteur cathodique **71, 71', 71"** dans le premier passage débouchant **61** et un moyen conducteur anodique **73, 73', 73"** dans le second passage débouchant **63,** chacun de ces moyens conducteurs étant apte à collecter au moins une partie du courant de la batterie.

Dans tous les cas, ces moyens conducteurs anodique et cathodique font saillie par rapport aux surfaces opposées de la structure des feuilles d'anode et de cathode empilées ; ces moyens conducteurs dépassent ainsi du volume global de l'empilement comme indiqué sur les figures 16A, 16B et 16C.

L'empilement de feuilles d'anode et de cathode, comprenant des moyens conducteurs anodique et cathodique, est ensuite découpé par tout moyen approprié selon les lignes de coupes **D'ₙ** et **Dₙ** de manière à obtenir des batteries unitaires.

Dans le cas des batteries imprégnées par un électrolyte liquide, l'imprégnation de la batterie par un électrolyte liquide est avantageusement effectuée après réalisation des moyens conducteurs ioniques, par une phase porteuse d'ions de lithium telle qu'un liquide ionique et/ou un mélange de liquides ioniques avec ou sans solvant et contenant un sel de lithium ; cette phase porteuse d'ions de lithium pénètre dans la batterie par capillarité. L'imprégnation peut être effectuée par des techniques connues en tant que telles.

Après la formation des moyens conducteurs, ou dans le cas des batteries imprégnées par un électrolyte liquide, après l'imprégnation de la batterie par une phase porteuse d'ions de lithium, il est avantageux d'encapsuler l'empilement en déposant un système d'encapsulation pour assurer la protection de la cellule de la batterie vis-à-vis de l'atmosphère. Le système d'encapsulation doit être stable chimiquement, résister à une température élevée et être imperméable à l'atmosphère pour jouer sa fonction de couche barrière. Avantageusement, l'empilement de feuilles d'anode et de feuilles de cathode selon l'invention, peut être recouvert d'une séquence, de préférence de z séquences, d'un système d'encapsulation comprenant :
- une première couche de recouvrement, de préférence choisi parmi le parylène, le parylène de type F, le polyimide, les résines epoxy, le silicone, le polyamide et/ou un mélange de ceux-ci, déposée sur l'empilement de feuilles d'anode et de cathode,
une deuxième couche de recouvrement composée d'une matière électriquement isolante, déposée par dépôt de couches atomiques (en anglais « Atomic Layer Déposition », ALD) ou dépôt chimique en phase vapeur assisté par plasma (en anglais « Plasma-Enhanced Chemical Vapor Déposition », PECVD) ou par dépôt chimique en phase vapeur de type HDPCVD (en anglais « High Density Plasma Chemical Vapor Déposition ») ou ICP CVD (Inductively Coupled Plasma Chemical Vapour Déposition en anglais) sur ladite première couche de recouvrement.

Cette séquence peut être répétée z fois avec z ≥ 1. Cette séquence multicouche a un effet barrière. Plus la séquence du système d'encapsulation sera répétée, plus cet effet barrière sera important. Il sera d'autant plus important que le nombre de couches minces déposées sera important.

Typiquement, la première couche de recouvrement est en polymère, par exemple en silicone, ou en résine epoxy, ou en polyimide, en polyamide, ou en poly-para-xylylène (plus connu sous le terme parylène). Cette première couche de recouvrement permet de protéger les éléments sensibles de la batterie de l'environnement. Cette première couche permet aussi de refermer les porosités de la surface de l'empilement et de créer une couche d'accroche uniforme pour les couches suivantes du système d'encapsulation. Cette couche recouvre, avantageusement, les six faces de la batterie et referme totalement cette dernière. L'épaisseur de ladite première couche de recouvrement est, de préférence, comprise entre 0,5 µm et 50 µm.

Avantageusement, la première couche de recouvrement peut être en parylène de type C, en parylène de type D, en parylène de type N (CAS 1633-22-3), en parylène de type F ou un mélange de parylène de type C, D, N et/ou F. Le parylène (appelé aussi polyparaxylylène ou poly(p-xylylène)) est un matériau diélectrique, transparent, semi cristallin qui présente une grande stabilité thermodynamique, une excellente résistance aux solvants ainsi qu'une très faible perméabilité. Le parylène a également des propriétés barrières permettant de protéger la batterie de son environnement externe. La protection de la batterie est accrue lorsque cette première couche de recouvrement est réalisée à partir de parylène de type F. Cette première couche de recouvrement est avantageusement obtenue à partir de la condensation de monomères gazeux déposés par dépôt chimique en phase vapeur (CVD) sur les surfaces, ce qui permet d'avoir un recouvrement conformal, mince et uniforme de l'ensemble des surfaces accessibles de l'empilement. Cette première couche de recouvrement est avantageusement rigide ; elle ne peut pas être considérée comme une surface souple. Cette première couche de recouvrement n'étant pas suffisamment étanche (en termes de perméance à la vapeur d'eau), il convient de déposer sur cette première couche de recouvrement au moins une deuxième couche de recouvrement composée d'une matière électriquement isolante, présentant, de préférence, une faible perméance à la vapeur d'eau.

La deuxième couche de recouvrement est composée d'une matière électriquement isolante, de préférence inorganique. Elle est avantageusement déposée par dépôt de couches atomiques (ALD), de manière à obtenir un recouvrement conformal de l'ensemble des surfaces accessibles de l'empilement préalablement recouvert de la première couche de recouvrement. Les couches déposées par ALD sont très fragiles mécaniquement et nécessitent une surface d'appui rigide pour assurer leur rôle protecteur. Le dépôt d'une couche fragile sur une surface souple conduirait à la formation de fissures, engendrant une perte d'intégrité de cette couche de protection. Par ailleurs, la croissance de la couche déposée par ALD est influencée par la nature du substrat. Une couche déposée par ALD sur un substrat présentant des zones de natures chimiques différentes aura une croissance inhomogène, pouvant engendrer une perte d'intégrité de cette couche de protection.

Les techniques de dépôt par ALD sont particulièrement bien adaptées pour recouvrir des surfaces présentant une forte rugosité de manière totalement étanche et conforme. Elles permettent de réaliser des couches conformales, exemptes de défauts, tels que des trous (couches dits « pinhole free », i.e. exempts de trous) et représentent de très bonnes barrières. Leur coefficient WVTR est extrêmement faible. La deuxième couche de recouvrement peut avantageusement être déposée par dépôt chimique en phase vapeur assisté par plasma (PECVD) ou par dépôt chimique en phase vapeur de type HDPCVD ou de type ICP CVD. Cette deuxième couche de recouvrement présente, de préférence, une épaisseur comprise entre 10 nm et 10 µm. L'épaisseur de cette deuxième couche est avantageusement choisie en fonction du niveau d'étanchéité aux gaz souhaité, i.e du coefficient WVTR souhaité et dépend de la technique de dépôt utilisée, notamment parmi ALD, PECVD, HDPCVD et ICPCVD. La deuxième couche de recouvrement peut être en matériau céramique, en matériau vitreux ou en matériau vitrocéramique, par exemple sous forme d'oxyde, de type Al₂O₃, de Ta₂O₅, de nitrure, de phosphates, d'oxynitrure, ou de siloxane.

Cette deuxième couche de recouvrement déposée par ALD, PECVD, HDPCVD ou ICP CVD sur la première couche de recouvrement permet d'une part, d'assurer l'étanchéité de la structure, i.e. d'empêcher la migration de l'eau à l'intérieur de l'objet, et d'autre part de protéger la première couche de recouvrement, qui est de préférence de parylène de type F, de l'atmosphère, notamment de l'air et de l'humidité, des expositions thermiques afin d'éviter sa dégradation. Cette deuxième couche de recouvrement améliore la durée de vie de la batterie encapsulée.

L'encapsulation de l'empilement de feuilles d'anode et de cathode dans cette séquence du système d'encapsulation, de préférence dans z séquences permet de réduire au maximum le coefficient WVTR du système d'encapsulation, i.e. d'accroitre l'étanchéité de l'empilement et de la batterie finale.

L'empilement de feuilles d'anode et de cathode ainsi encapsulé dans cette séquence du système d'encapsulation, de préférence dans z séquences, peut ensuite être revêtu d'une dernière couche de recouvrement de manière à protéger mécaniquement l'empilement ainsi encapsulé et éventuellement lui conférer un aspect esthétique. Cette dernière couche de recouvrement protège et améliore la durée de vie de la batterie. Avantageusement cette dernière couche de recouvrement est également choisie pour résister à une température élevée, et présente une résistance mécanique suffisante pour protéger la batterie lors de son utilisation ultérieure. Avantageusement, l'épaisseur de cette dernière couche de recouvrement est comprise entre 1 µm et 50 µm. Idéalement, l'épaisseur de cette dernière couche de recouvrement est d'environ 10-15 µm, une telle gamme d'épaisseur permet de protéger la batterie contre l'endommagement mécanique.

Cette dernière couche de recouvrement est de préférence à base de résine époxy, de polyéthylène naphtalate (PEN), de polyimide, de polyamide, de polyuréthane, de silicone, de silice sol-gel ou de silice organique. Avantageusement, cette dernière couche de recouvrement est déposée par trempage.

De manière alternative, le système d'encapsulation, permettant d'assurer la protection de la cellule de la batterie, ou de l'empilement de feuilles d'anode et de feuilles de cathode selon l'invention, vis-à-vis de l'atmosphère peut être constitué d'une séquence, de préférence de z' séquences, comprenant une première couche de recouvrement alternative présentant un très faible coefficient WVTR, de préférence inférieur à 10⁻⁵ g/m².d,. Cette séquence peut être répétée z' fois avec z ≥ 1. Elle présente un effet barrière, qui est d'autant plus important que la valeur de z' est élevée. L'encapsulation de l'empilement de feuilles d'anode et de cathode dans cette séquence du système d'encapsulation, de préférence dans z' séquences permet de réduire au maximum le coefficient WVTR du système d'encapsulation, i.e. d'accroitre l'étanchéité de l'encapsulation, d'accroitre l'étanchéité de l'empilement et in fine d'accroitre l'étanchéité de la batterie.

L'épaisseur de ladite première couche de recouvrement alternative est, de préférence, comprise entre 0,5 µm et 50 µm.

Cette couche de recouvrement alternative peut être composée d'un matériau céramique et/ou d'un verre à bas point de fusion, de préférence d'un verre dont le point de fusion est inférieur à 600°C, déposée à la périphérie externe de l'empilement de feuilles anodique et cathodique. Le matériau céramique et/ou verre employé dans cette couche est avantageusement choisi parmi :
- un verre à bas point de fusion (typiquement < 600°C), de préférence SiO₂-B₂O₃ ; Bi₂O₃-B₂O₃, ZnO-Bi₂O₃-B₂O₃, TeO₂-V₂O₅, PbO-SiO₂,
- des oxydes, des nitrures, des oxynitrures, du SiₓN_{y}, SiO₂, SiON du Silicium amorphe ou du SiC.

Ces verres peuvent être déposés par moulage ou par dip-coating.

Les matériaux céramiques sont avantageusement déposés par PECVD ou préférentiellement par HDPCVD ou par ICP CVD à basse température ; ces procédés permettent de déposer une couche ayant de bonnes propriétés d'étanchéité.

Avantageusement, le système d'encapsulation alternatif peut comprendre z' couches de recouvrement alternatif de nature différente afin de réduire le coefficient WVTR de l'encapsulation, i.e. d'accroitre l'étanchéité de l'empilement. A titre d'exemple, le système d'encapsulation peut comprendre une première couche composée d'un matériau céramique, une deuxième couche composée d'un verre à bas point de fusion disposée sur la première couche, et inversement.

L'encapsulation dans un film de verre peut être obtenue par dépôt d'une encre comprenant des oxydes, des phosphates, des borates et ou des précurseurs d'un verre à bas point de fusion, suivi d'un frittage.

On obtient ainsi une encapsulation rigide et étanche, qui empêche notamment le passage de la vapeur d'eau au niveau de l'interface entre le système d'encapsulation et les organes de contact.

Après avoir assuré l'étanchéité de la cellule batterie par son encapsulation, les connexions électriques sont mises à nu au niveau des extrémités des moyens conducteurs de la batterie par tout moyen, notamment par polissage.

Des terminaisons (contacts électriques) sont ajoutées au niveau où les connexions cathodiques, respectivement anodiques sont apparentes (non revêtues d'électrolyte isolant). Ces zones de contact sont, de préférence, disposées sur des côtés opposés de l'empilement de la batterie pour collecter le courant. Les connexions sont métallisées à l'aide de techniques connues de l'homme du métier, de préférence par immersion dans une résine époxy conductrice et / ou un bain d'étain en fusion.

Les terminaisons peuvent être réalisées sous forme d'une seule couche métallique, d'étain par exemple ou encore être constituées de multicouches. De préférence, les terminaisons sont constituées, aux abords des connexions cathodique et anodique, d'un premier empilement de couches comprenant successivement une première couche de polymère conducteur, tel qu'une résine chargée à l'argent, d'une seconde couche de nickel déposée sur la première couche et d'une troisième couche d'étain déposée sur la deuxième couche. Les couches de nickel et d'étain peuvent être déposées par des techniques d'électrodéposition.

Dans ce complexe à trois couches, la couche de nickel protège la couche de polymère pendant les étapes d'assemblage par soudure, et la couche d'étain assure la soudabilité de l'interface de la batterie.

Les terminaisons permettent de reprendre les connexions électriques positives et négatives sur les faces supérieures et inférieures de la batterie. Ces terminaisons permettent de réaliser les connexions électriques en parallèle entre les différents éléments de batterie. Les connexions cathodiques sortent, de préférence, sur un côté latéral de la batterie, et les connexions anodiques sont disponibles, de préférence, sur l'autre côté latéral.

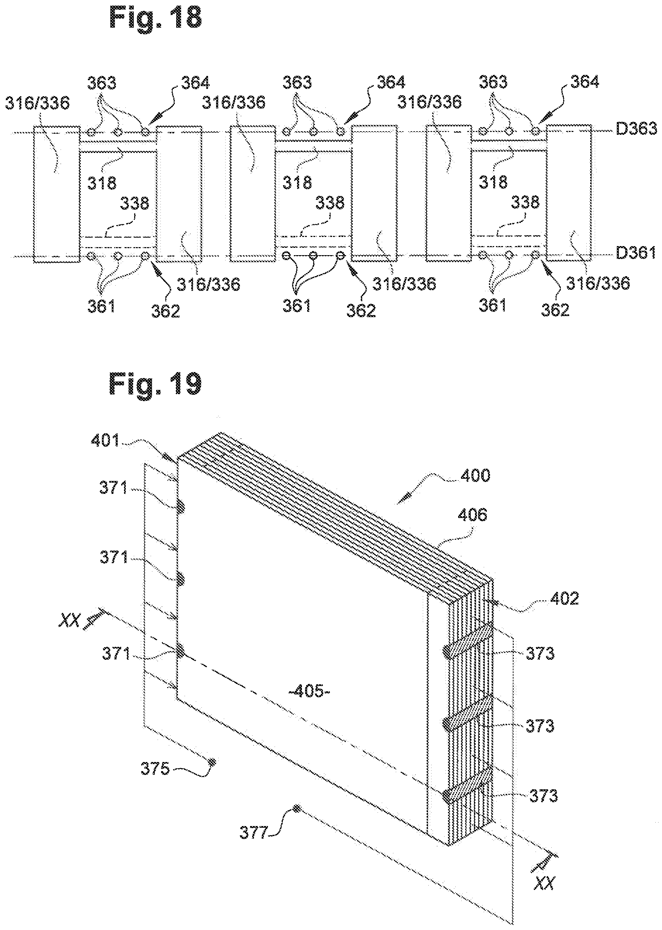

Les figures 18 à 20 illustrent une variante de réalisation de la batterie 100, selon le premier mode de réalisation ci-dessus. Sur ces figures 18 à 20 les éléments mécaniques, analogues à ceux du premier mode de réalisation, sont affectés des mêmes numéros de référence augmentés du nombre 300.

La batterie finale conforme à cette variante des figures 18 à 20, qui est référencée 400, diffère de celle 100 notamment en ce que les organes conducteurs ne sont pas prévus au même emplacement. La figure 18, qui est analogue à la figure 5, représente l'agencement des fentes 334 en forme de H, lesquelles ne sont pas associées à des passages débouchants, tels que ceux 61 et 63. En effet, des perforations 361 et 363 sont ménagées dans les feuilles d'anode et de cathode. Pour chaque fente en H les perforations 361 forment, entre les évidements 316 336 de ce H, une première rangée 362. Par ailleurs les autres perforations 363 forment, entre ces mêmes évidements 316 336, une seconde rangée 364.

Dans l'exemple illustré, chaque rangée 362 et 364 est respectivement formée de trois perforations. À titre de variante, on peut prévoir un nombre différent de ces perforations, ce nombre étant en particulier dépendant de la largeur du composant. On peut prévoir une perforation unique, ou bien au contraire un nombre de perforations bien supérieures à trois.

Chaque rangée de perforations est agencée le long d'une ligne de découpe respective D361 et D363, en étant traversée par ces lignes de découpe. De manière avantageuse, chaque ligne de découpe traverse les différentes perforations, selon le milieu de ces dernières. Dans l'exemple illustré, chaque perforation présente une forme circulaire, avec un diamètre typiquement compris entre 50 µm et 5 mm. Par conséquent, chaque ligne de découpe forme un diamètre des différentes perforations qu'elle traverse. Enfin la distance entre le bord de chaque perforation et la paroi en regard, soit d'un évidement ou bien soit d'un canal de la fente, sera choisie par l'homme du métier de manière à éviter toute déchirure intempestive de la feuille.

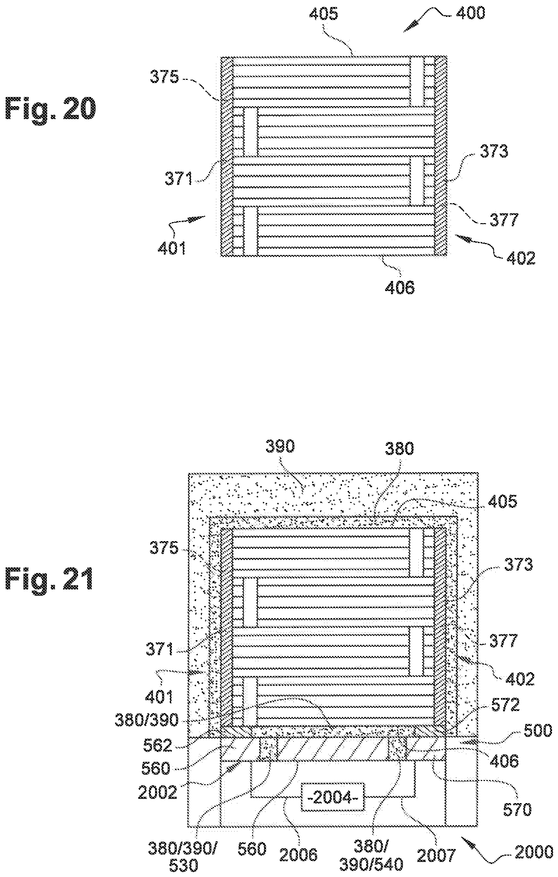

Lors de la fabrication, le volume intérieur des différentes perforations est rempli d'un matériau approprié, de nature conductrice. À titre d'exemple, on peut citer une résine, un polymère ou encore un verre conducteur. Les découpes D361 et D363 permettent alors de réaliser des organes conducteurs 371 et 373, comme cela est montré sur les figures 19 et 20 illustrent la batterie finale. Les organes conducteurs 371 sont formés à partir du matériau conducteur, introduit initialement dans les perforations 361, alors que les organes conducteurs 373 sont formés à partir du matériau conducteur des perforations 363.

Étant donné que les différentes feuilles sont découpées selon le milieu des perforations 361 363, chaque organe conducteur 371 373 présente une forme sensiblement semi cylindrique, dont le diamètre correspond à celui d'une perforation. Cet organe conducteur est reçu dans un passage débouchant, au sens de ce qui a été décrit en référence au premier mode de réalisation. Contrairement à ce premier mode, ce passage débouchant n'est pas cylindrique, mais semi cylindrique puisqu'il correspond à la forme de l'organe conducteur ci-dessus.

Comme cela est visible en particulier sur la figure 19, chaque bord latéral 401,402 est formé par une alternance entre des zones conductrices électriques, chacune constituée par un organe conducteur respectif 371 373, ainsi que des zones dites d'empilement ouvertes. Ces dernières, qui sont référencées 375 et 377, permettent une imprégnation aisée par l'électrolyte. On notera que, dans le mode de réalisation des figures 18 à 20, chaque organe conducteur affleure un bord latéral respectif 401 et 402, contrairement au premier mode de réalisation pour lequel les organes conducteurs sont situés à distance du bord latéral en regard.

Ce mode de réalisation des figures 18 à 20 présente des avantages spécifiques. En effet, chaque organe conducteur est formé en même temps qu'on réalise les découpes des feuilles. Dans cet esprit les perforations, qui permettent la réalisation de ces organes conducteurs, contribuent à faciliter les opérations de découpe. Par ailleurs le matériau constitutif de l'organe conducteur est solidifié, avant le remplissage par le liquide ionique. Cela permet de garantir un contact électrique satisfaisant.

On notera en outre que chaque organe conducteur débouche, d'une part horizontalement sur les bords latéraux 401 402 de la batterie, d'autre part verticalement sur les faces respectivement supérieure 405 et inférieure 406 de cette même batterie. Cela confère une grande commodité, en ce qui concerne la récupération du courant électrique produit. En effet ce courant peut être collecté au choix, soit uniquement au niveau des bords latéraux, soit uniquement au niveau des faces supérieures et inférieures, soit au niveau à la fois de ces bords latéraux et de ces faces opposées.

En particulier, comme le montre la figure 21, le courant peut être récupéré grâce à un support prévu au-dessous de la batterie. Ce support 500, qui est globalement plan, possède typiquement une épaisseur inférieure à 300 µm, de préférence inférieure à 100 µm. Ce support est avantageusement réalisé en un matériau conducteur électrique, typiquement un matériau métallique. On choisira en particulier de l'aluminium, du cuivre, ou encore un acier inoxydable, ces matériaux pouvant être revêtus par un fine couche d'or, de nickel et d'étain, afin d'améliorer leur propriété de soudabilité. On note respectivement 510 la face avant du support, qui est tournée vers les couches d'anode et de cathode, ainsi que 520 la face arrière opposée.

Ce support est ajouré, à savoir qu'il comprend des espaces 530 et 540 délimitant une semelle centrale 550 ainsi que deux bandes latérales opposées 560 et 570. Les différentes régions 550, 560 et 570 de ce support sont, par conséquent, mutuellement isolées sur le plan électrique. A cet effet les espaces 530 et 540 sont remplis au moyen de tout matériau non conducteur approprié.

Par ailleurs les bandes latérales 560 et 570 forment des régions mutuellement isolées électriquement, qui sont connectées avec les organes conducteurs 371 et 373 ci-dessus. À cet effet, chaque organe conducteur est avantageusement fixé sur une bande latérale respective, grâce à l'interposition d'un tampon 562 572 réalisé en une colle électriquement conductrice.

Dans ce mode de réalisation, il est prévu un système d'encapsulation 380, réalisé en tout matériau approprié analogue à celui du système d'encapsulation 80 ci-dessus. De manière à garantir le critère essentiel d'étanchéité il convient de s'assurer que les composants, potentiellement nocifs au bon fonctionnement de la batterie, ne peuvent accéder à l'empilement élémentaire des anodes et des cathodes. En d'autres termes, conformément à l'invention, il s'agit d'éviter toute « porte d'entrée » potentielle pour ses composants nocifs.

À cet effet le matériau d'encapsulation 380 recouvre tout d'abord les bords latéraux de la batterie, c'est-à-dire les organes conducteurs 371 et 373, ainsi que les zones ouvertes d'empilement 375 et 377. Il occupe également, de manière avantageuse, les espaces libres 530 et 540 du support 500. Il remplit également l'espace intercalaire séparant, d'une part la face inférieure de l'empilement élémentaire des anodes et des cathodes, d'autre part la façon regard du support. Étant donné que cette encapsulation est typiquement réalisée en couches minces, dont l'épaisseur ne dépasse généralement pas 10 µm, on retrouve en particulier le matériau d'encapsulation au niveau des différentes surfaces, qu'il a tendance à tapisser. Pour mieux visualiser le remplissage des différentes zones de la batterie par ce matériau d'encapsulation, on a porté la référence 380 à plusieurs reprises sur cette figure 21.

Enfin on peut prévoir que, selon un mode de réalisation avantageux de l'invention, la batterie est en outre équipée d'un système de rigidification, désigné dans son ensemble par la référence 390. Ce système de rigidification recouvre l'ensemble du système d'encapsulation 380, à l'opposé du support 500. Par ailleurs ce matériau de rigidification occupe avantageusement tout ou partie, d'une part des espaces libres 530 et 540, d'autre part de l'espace intercalaire entre le support et les feuilles d'anode et de cathode. Dans ces différentes zones, ce matériau de rigidification se trouve par conséquent intimement lié au matériau d'encapsulation. On retrouve ce mélange intime au moins au niveau des surfaces puisque, comme on l'a vu ci-dessus, le matériau d'encapsulation est majoritairement présent au niveau de ces surfaces. La présence des matériaux ci-dessus permet d'assurer de façon optimale les fonctions souhaitées, non seulement d'étanchéité, mais également de rigidité mécanique.

Ce système de rigidification 390 peut être réalisé en tout matériau, permettant d'assurer cette fonction spécifique de rigidité mécanique. Dans cette optique on choisira par exemple une résine pouvant consister en un polymère simple ou un polymère chargé avec des charges inorganiques. La matrice polymère peut être de la famille des epoxy, des acrylates, polymères fluorés par exemple, les charges pouvant consister en des particules, des flocons ou des fibres de verre.

De façon avantageuse, ce système de rigidification 390 peut assurer une fonction supplémentaire de barrière à l'égard de l'humidité. Dans cette optique on choisira par exemple un verre à bas point de fusion, assurant ainsi résistance mécanique et une barrière supplémentaire à l'humidité. Ce verre peut être par exemple de la famille des SiO₂-B₂O₃ ; Bi₂O₃-B₂O₃, ZnO-Bi₂O₃-B₂O₃, TeO₂-V₂O₅, PbO-SiO₂.

L'épaisseur du système d'encapsulation est avantageusement très faible, en particulier inférieure à 50 µm, de préférence à 20 µm. De façon typique le système de rigidification présente une épaisseur bien supérieure à celle du système d'encapsulation. À titre d'exemple l'épaisseur de ce système de rigidification est comprise entre 50 et 250µm, typiquement voisine de 100µm. La présence d'un système supplémentaire de rigidification apporte des avantages complémentaires, à savoir une fonction de protection mécanique et chimique, éventuellement associée à une fonction de barrière supplémentaire aux gaz.

En service, de façon classique, de l'énergie électrique est produite au niveau des anodes 3 et des cathodes 1. Cette énergie est transmise aux régions conductrices 560 570 du support 500, par l'intermédiaire des organes conducteurs 371,373. Étant donné que ces régions conductrices sont mutuellement isolées, tout risque de court-circuit est évité. L'énergie électrique est alors dirigée, à partir des régions 560 et 570, vers un dispositif de consommation d'énergie de tout type approprié.

Sur la figure 21, ce dispositif de consommation d'énergie est représenté de manière schématique, en étant affecté de la référence 2000. Il comprend un corps 2002, sur lequel repose la face inférieure du support, un élément consommateur d'énergie 2004, ainsi qu'une liaison électrique 2006 reliant la face inférieure du support 50 avec cet élément 2004. La commande peut être assurée par tous moyens appropriés, notamment grâce à un composant non représenté appartenant au dispositif 2000. À titre de variante on peut prévoir que cette fonction de commande est assurée par un composant, monté sur le support 500 ci-dessus.

À titre d'exemples non limitatifs, un tel dispositif de consommation d'énergie peut être un circuit électronique de type amplificateur, un circuit électronique de type horloge (tel qu'un composant RTC, Real Time Clock), un circuit électronique de type mémoire volatile, un circuit électronique de type mémoire vive statique (SRAM, Static Random Access Memory), un circuit électronique de type microprocesseur, un circuit électronique de type chien de garde (watchdoc timer), un composant de type afficheur à cristaux liquides, un composant de type LED (Light Emitting Diode), un circuit électronique de type régulateur de tension (tel qu'un circuit régulateur de tension à chute faible, abrégé LDO, Low-dropout regulator), un composant électronique de type CPU (Central Processing Unit).

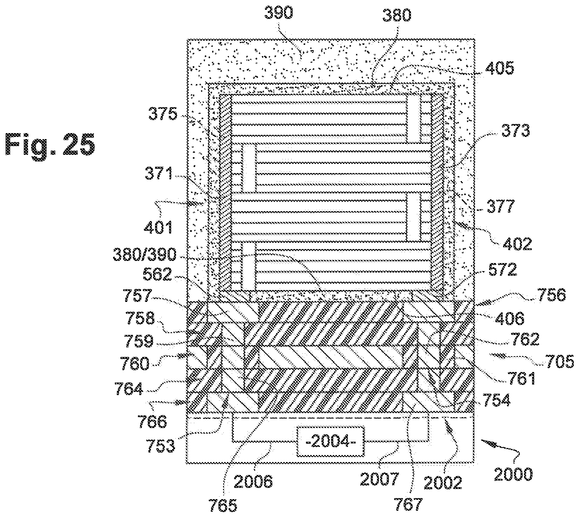

On va maintenant décrire, en référence à la figure 25, une variante de réalisation dans laquelle le support conducteur 750 est multicouche, par opposition au support 50 ci-dessus, de type monocouche. Par ailleurs, ce support 750 est de type plein, par opposition notamment à la grille métallique ci-dessus qui est de type ajouré. Comme le montre cette figure, le support 750 est formé de couches, réalisées par exemple en un matériau polymère. Ces couches s'étendent les unes au-dessous des autres, leur plan principal étant sensiblement parallèle au plan des couches formant l'empilement d'anodes et de cathodes. La structure de ce support est par conséquent à rapprocher de celle d'un circuit imprimé (en langue anglaise « Printed Circuit Board » ou PCB).

On retrouve, de haut en bas sur la figure 25, une couche 756 sur laquelle va être déposé l'empilement de la batterie. Cette couche 756, qui est principalement formée par un matériau polymère, tel que de la résine époxy, est munie de 2 inserts 757. Ces derniers, qui sont réalisés en un matériau conducteur, notamment métallique, sont destinés à coopérer avec les contacts respectivement anodique et cathodique de la batterie. On notera que ces inserts 757 sont mutuellement isolés, grâce à la résine époxy de la couche 756.

Immédiatement au-dessous de la couche 756, on retrouve une couche 758, également réalisée en un matériau polymère comme une résine époxy. Cette couche 758 est pourvue de 2 inserts 759, réalisés en matériau conducteur, qui sont mis en contact électrique avec les premiers inserts 757. Comme pour la couche 756, ces inserts 759 sont mutuellement isolés.

On retrouve ensuite une couche médiane 760, qui est sensiblement différente de celles 756 et 758 décrites ci-dessus. En effet, cette couche 760 est formée d'un matériau conducteur, typiquement analogue à celui constitutif des inserts 757 et 759 ci-dessus. Cette couche est équipée de 2 inserts annulaires 761, qui sont réalisés en un matériau isolant, notamment une résine époxy comme ci-dessus. Ces inserts 761 reçoivent, dans leur partie centrale creuse, des disques 762 en matériau conducteur, qui sont placés au contact des inserts conducteurs adjacents 759. On notera que ces disques conducteurs 762 sont mutuellement isolés, par l'intermédiaire des anneaux 761.

Enfin on retrouve des couches 764 et 766, inférieures sur la figure 25, qui sont respectivement identiques aux couches 758 et 756 ci-dessus. Le couche 764 est équipée de 2 inserts 765, en contact avec les disques 762, alors que la couche inférieure 766 est munie de 2 inserts 767, en contact avec les inserts ci-dessus 765. Les différents inserts conducteurs 757,759,762,765 et 767 définissent des chemins conducteurs notés 753 754, qui permettent de relier électriquement les faces frontales opposées du support 705. Ces chemins sont mutuellement isolés, soit par les couches 756,758,764 et 766, soit par les disques 761. Dans ce mode de réalisation, le système de rigidification peut être différent de celui 80 du premier mode de réalisation. On peut en particulier prévoir de déposer un film protecteur 780, moyennant une étape de lamination. Un tel film, qui présente des propriétés barrières, est par exemple réalisé en polyéthylène téréphtalate (PET) intégrant des multicouches inorganiques ; un tel produit qui peut convenir est disponible dans le commerce auprès de la société 3M sous la référence Ultra Barrier Film 510 ou Ultra Barrier Solar Films 510-F.

La figure 25 illustre également l'intégration, sur un dispositif consommateur d'énergie 2000, du support 705, de l'empilement 702, des plots conducteurs 730 et 740, de l'encapsulation 707 et du film 708. Comme dans le premier mode de réalisation, l'énergie produite au niveau de l'empilement 702 est transmise, par les organes de contact 730 et 740, au niveau des inserts supérieurs 757. Puis cette énergie est transmise, le long des chemins de connexion 753 754 décrit ci-dessus, vers le dispositif de consommation d'énergie 2000.

Dans sa structure la plus générale, le support multicouche peut être formé uniquement de deux couches distinctes, l'une au-dessous de l'autre, qui définissent des chemins conducteurs, analogues à ceux 753 754 décrits ci-dessus. Ce mode de réalisation particulier présente des avantages spécifiques, puisque le support multicouche tel que celui 750 possède une épaisseur très faible, avantageusement inférieure à 100 µm. Par ailleurs, un tel support présent une certaine flexibilité, de sorte qu'il peut accompagner de légers changements de dimensions de la batterie, dénommés « respirations » dans la partie introductive de la présente description. Ce support bénéficie en outre d'une tenue en flexion particulièrement satisfaisante, en vue de son intégration sur un circuit électronique souple.

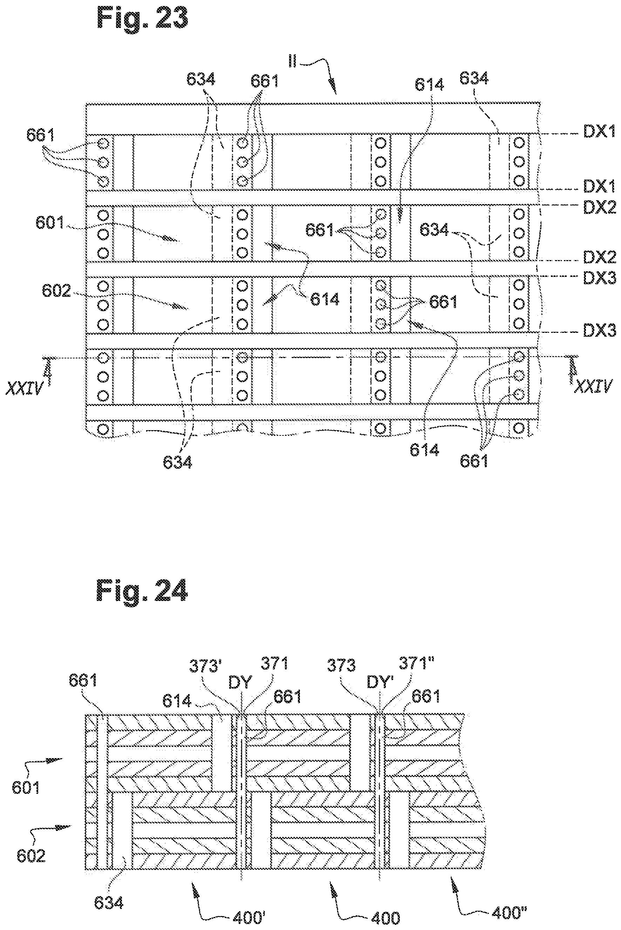

A titre de variante supplémentaire, non représentée, on peut combiner la variante des figures 18 à 20 avec la variante des figures 13 et 14. Dans ce cas des perforations sont ménagées entre chaque couple d'évidements 1016 adjacents, appartenant à la fente 1014. À titre de variante supplémentaire, non représentée, on peut prévoir de placer la batterie 100 du premier mode de réalisation sur le support 500 de la figure 23.

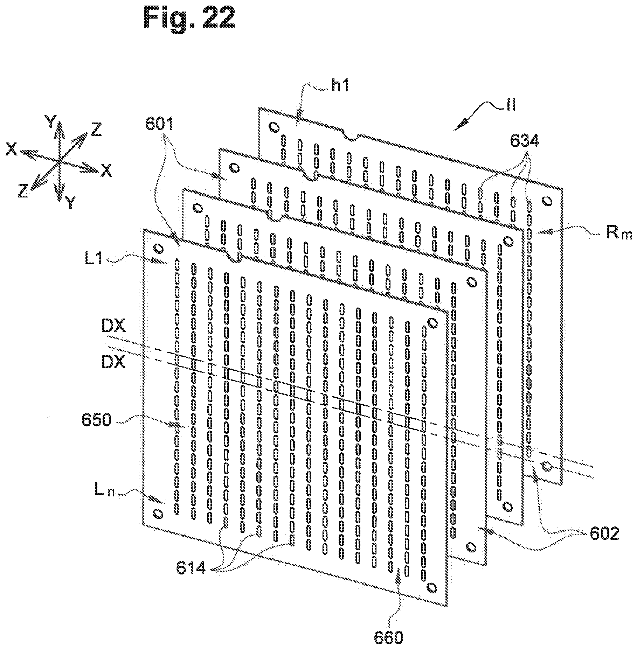

Les figures 22 à 24 illustrent une variante de réalisation, qui est une alternative au procédé de fabrication illustré en référence aux figures 18 à 20. On notera que le procédé des figures 22 à 24 permet d'obtenir une batterie 400, qui est similaire à celle obtenue grâce au procédé des figures 18 à 20. Sur les figures 22 à 24 les éléments mécaniques, qui sont analogues à ceux des figures 18 à 20, sont affectés des mêmes numéros de référence augmentés du nombre 300.

Comme cela est montré sur les figures 22 et 23 chaque feuille 601 et 602, respectivement anodique et cathodique, comporte des fentes ou zones vides, respectivement 614 et 634, qui sont allongées en présentant typiquement une forme de I. En référence notamment à la figure 23 ces fentes sont réparties selon des lignes L1 à Ln, horizontales sur cette figure, qui sont disposées les unes au-dessous des autres, ainsi que selon des rangées R1 à Rm, verticales sur cette figure, qui sont disposées les unes à côté des autres. Les lignes adjacentes sont séparées par des ponts de matière horizontaux 650, alors que les rangées adjacentes sont séparées par des ponts de matière verticaux 660. De manière typique, la largeur de ces différents ponts de matière est comprise entre 0,05 mm et 5 mm. Ces ponts de matière confèrent aux différentes feuilles une rigidité mécanique suffisante, de sorte qu'elles peuvent être manipulées aisément.

En vue de dessus, comme illustré sur cette figure 23, les différentes fentes cathodiques 614 sont confondues, c'est-à-dire mutuellement superposées. De manière analogue, les différentes fentes anodiques 634 sont également confondues. En revanche, les fentes anodiques et les fentes cathodiques ne sont pas confondues, en ce sens qu'elles sont décalées l'une par rapport à l'autre. Ces fentes créent donc une pluralité d'espaces intermédiaires 635, le long desquels on réalise des perforations 661. Ces dernières sont typiquement analogues, en ce qui concerne leur forme et leur dimension, aux perforations 361 et 363 des figures 18 à 20. Comme dans le mode de réalisation des figures 18 à 20, les perforations 661 reçoivent un matériau apte à former un organe conducteur 371 ou 373.

On suppose que, comme ci-dessus, l'empilement formé par les feuilles 601 et 602 a subi des opérations permettant d'assurer sa stabilité générale. Puis, on réalise des paires de découpes dites préalables, dont l'une DX est visible sur la figure 22. De façon plus précise, la figure 23 illustre plusieurs de ces découpes. Chaque paire de découpes DX1, DX2 ou DX3, permet d'isoler une ligne de batteries donnée vis-à-vis des lignes adjacentes. À cet effet, ces découpes sont réalisées au voisinage des extrémités longitudinales opposées de chaque fente en I, à savoir de ses extrémités respectivement supérieure et inférieure sur la figure 23. Le nombre de batteries, au sein d'une même ligne, correspond au nombre de rangées visibles notamment sur la figure 22.

Puis on met en oeuvre des découpes supplémentaires, dite principales, permettant de séparer chaque batterie, appartenant à une ligne donnée, par rapport aux batteries qui lui sont adjacentes. À cet effet, comme le montre la figure 24, ces découpes principales DY sont réalisées dans les espaces intercalaires définis ci-dessus, au travers des perforations 661. Comme dans le mode de réalisation précédent, on préfère que chaque découpe s'étende selon le milieu de ces perforations.

Au terme de la mise en oeuvre de ces découpes DY, les différentes batteries individuelles sont séparées les unes des autres. Par ailleurs, chaque découpe permet de délimiter deux organes conducteurs, dont chacun appartient à une batterie respective. Sur la figure 4 on a référencé des organes conducteurs appartenant à trois batteries adjacentes 400, 400' et 400". Les organes conducteurs 373' et 371 sont mutuellement isolés par une première découpe DY, alors que les organes conducteurs 373 et 371" sont mutuellement isolés par la découpe voisine DY'.

À titre de variante supplémentaire, également non représentée, on peut prévoir que les perforations sont laissées vides. Cette possibilité présente des avantages spécifiques, en ce qu'elle améliore l'opération de découpe. En effet, grâce à la présence des perforations, cette découpe est rendue plus rapide. Par ailleurs, l'échauffement subi par les outils de coupe se trouve avantageusement réduit.

Selon l'invention, la batterie peut comprendre toute combinaison techniquement compatible des systèmes d'encapsulation tels que décrits, des moyens conducteurs anodique et cathodique et des terminaisons.

La batterie selon l'invention peut être une microbatterie aux ions de lithium, une minibatterie aux ions de lithium, ou encore une batterie à ions de lithium de forte puissance. En particulier, elle peut conçue et dimensionnée de manière à avoir une capacité inférieure ou égale à environ 1 mA h (appelée couramment « microbatterie »), de manière à avoir une puissance supérieure à environ 1 mA h jusqu'à environ 1 A h (appelée couramment « minibatterie »), ou encore de manière à avoir une capacité supérieure à environ 1 A h (appelée couramment « batterie de puissance »). De manière typique, les microbatteries sont conçues de manière à être compatibles avec les procédés de fabrication de la microélectronique.

Les batteries de chacune de ces trois gammes de puissance peuvent être réalisées :
- soit avec des couches de type « tout solide », i.e. dépourvues de phases liquides ou pâteuses imprégnées (lesdites phases liquides ou pâteuses pouvant être un milieu conducteur d'ions de lithium, capable d'agir comme électrolyte),
- soit avec des couches de type « tout solide » mésoporeuses, imprégnées par une phase liquide ou pâteuse, typiquement un milieu conducteur d'ions de lithium, qui entre spontanément à l'intérieur de la couche et qui ne ressort plus de cette couche, de sorte que cette couche puisse être considérée comme quasi-solide,
- soit avec des couches poreuses imprégnées (i.e. couches présentant un réseau de pores ouverts qui peuvent être imprégnés avec une phase liquide ou pâteuse, et qui confère à ces couches des propriétés humides).

## Revendications

1. Batterie (100) comprenant au moins une anode (3) et au moins une cathode (1), disposée l'une au-dessus de l'autre de manière alternée, ladite batterie (100) comprenant des bords latéraux (101, 102) comprenant au moins une zone de connexion anodique et au moins une zone de connexion cathodique, latéralement opposée à la zone de connexion anodique, et des bords longitudinaux (103, 104), dans laquelle l'anode (3) comprend :
- un substrat collecteur de courant,
- au moins une couche d'anode, et
- éventuellement une couche d'un matériau d'électrolyte ou d'un séparateur imprégné d'un électrolyte,
et la cathode (1) comprend :
- un substrat collecteur de courant,
- au moins une couche de cathode, et
- éventuellement une couche d'un matériau d'électrolyte ou d'un séparateur imprégné d'un électrolyte,
de sorte que la batterie comprend un empilement élémentaire successivement d'au moins une couche d'anode, d'au moins une couche d'un matériau d'électrolyte ou d'un séparateur imprégné d'un électrolyte, et d'au moins une couche de cathode,
**caractérisée en ce que**
- chaque anode et chaque cathode comprend un corps principal (111, 131) respectif, séparé d'un corps secondaire (112, 132) respectif, par un espace libre (113, 133) de tout matériau d'électrode et de substrat collecteur de courant, ledit espace libre reliant les bords longitudinaux (103, 104) opposés de la batterie,
- chaque anode et chaque cathode comprend, en vue de dessus, au moins un premier trou débouchant (51, 53) réalisé dans le corps principal et un second trou débouchant (52, 54) réalisé dans le corps secondaire,
étant entendu que chaque premier trou débouchant (51) réalisé dans le corps principal de la cathode, s'étend dans le prolongement de chaque second trou débouchant (54) réalisé dans le corps secondaire de l'anode, de sorte que ces trous (51, 54), s'étendant les uns dans le prolongement des autres, forment un premier passage débouchant (61) qui traverse de part en part la batterie,
et que chaque premier trou débouchant (53) réalisé dans le corps principal de l'anode, s'étend dans le prolongement de chaque second trou débouchant (52) réalisé dans le corps secondaire de la cathode, de sorte que ces trous (52, 53), s'étendant les uns dans le prolongement des autres, forment un second passage débouchant (63) qui traverse de part en part la batterie,
- la batterie comprend en outre au moins un moyen conducteur cathodique (71, 71', 71") reçu dans ledit premier passage débouchant (61) et au moins un moyen conducteur anodique (73, 73', 73") reçu dans ledit second passage débouchant (63), le moyen conducteur anodique (73, 73', 73") étant apte à collecter au moins une partie du courant de la batterie en direction d'au moins une zone de connexion anodique et le moyen conducteur cathodique (71, 71', 71") étant apte à collecter au moins une partie du courant de la batterie en direction d'au moins une zone de connexion cathodique.

2. Batterie selon la revendication précédente, dans laquelle chaque passage débouchant s'étend à distance d'un bord latéral en regard (101,102), de préférence, dans laquelle la plus petite distance (D₅₉ / D₅₆) séparant chaque passage débouchant (61) et ledit bord latéral en regard est comprise entre 0,04 mm et 1,95 mm.

3. Batterie selon la revendication 1, dans laquelle chaque passage débouchant est ménagé directement dans ledit bord latéral (401, 402), le moyen conducteur respectivement cathodique ou anodique affleurant ledit bord latéral et présentant notamment une forme de demi-cylindre.

4. Batterie selon l'une quelconque des revendications précédentes, **caractérisée en ce que** les moyens conducteurs anodiques et cathodiques sont choisis, indifféremment l'un de l'autre, parmi :
- une barre formée d'un matériau conducteur électrique,
- une tige métallique à ajustement serré,
- une tige métallique entourée d'un matériau fourreau conducteur électrique.

5. Batterie selon la revendication précédente, dans laquelle les deux extrémités opposées, soit de ladite barre, soit de ladite tige métallique définissent des têtes de fixation.

6. Batterie selon l'une des revendications précédentes, comprenant en outre
- un support de connexion électrique, réalisé au moins en partie en un matériau conducteur,
- des moyens d'isolation électrique, permettant d'isoler mutuellement deux régions distantes de ce support de connexion, ces régions distantes formant des chemins de connexion électrique respectifs,
- ledit moyen conducteur cathodique étant mis en contact électrique avec un premier chemin de connexion électrique, alors que ledit moyen conducteur anodique est mis en contact électrique avec le second chemin de connexion électrique.

7. Batterie selon la revendication précédente, dans laquelle :
- le support de connexion électrique est de type monocouche, notamment une grille métallique ou encore un interposer silicium, ou
- le support de connexion électrique comprend plusieurs couches disposées les unes au-dessous des autres, ce support étant notamment de type circuit imprimé.

8. Batterie selon l'une quelconque des revendications précédentes, **caractérisée en ce que** :
- la dimension transversale, ou largeur, de l'espace libre (L₁₁₃) est comprise entre 0,01 mm et 0,5 mm, et/ou
- la dimension transversale, ou largeur, des corps secondaires (L₁₁₂) est comprise entre 0,05 mm et 2 mm, et/ou
- des faces libres des corps secondaires respectivement des cathodes (112') et des anodes (132'), qui sont opposées à l'espace libre, affleurent des faces libres du corps principal respectivement des anodes (131') et des cathodes (111'), et/ou
- elle comprend un système d'encapsulation revêtant quatre des six faces de ladite batterie, et partiellement les deux autres faces, ces deux autres faces étant opposées et sensiblement perpendiculaires aux premier et second passages débouchants (61, 63) de la batterie comprenant au moins une zone de connexion anodique et au moins une zone de connexion cathodique ; le système d'encapsulation comprenant de préférence :
- au moins une première couche de recouvrement, de préférence choisie parmi le parylène, le parylène de type F, le polyimide, les résines epoxy, le silicone, le polyamide, la silice sol-gel, la silice organique et/ou un mélange de ceux-ci, déposée sur la batterie,
- au moins une deuxième couche de recouvrement composée d'une matière électriquement isolante, déposée par dépôt de couches atomiques ou PECVD, HDPCVD ou ICPCVD sur ladite au moins première couche de recouvrement, étant entendu que cette séquence d'au moins une première couche de recouvrement et d'au moins une deuxième couche de recouvrement peut être répétée z fois avec z ≥ 1.
ou comprenant de préférence :
- au moins une première couche de recouvrement ayant un très faible coefficient WVTR, de préférence un coefficient de WVTR inférieur à 10⁻⁵ g/m².d, déposée à la périphérie externe de l'empilement de feuilles anodique et cathodique,
étant entendu que cette première couche de recouvrement peut être répétée z' fois avec z' ≥ 1,
l'au moins une première couche de recouvrement comprenant, de préférence:
- un matériau céramique, de préférence choisi parmi des oxydes, des nitrures, des oxynitrures, du SiₓN_{y}, SiO₂, SiON du Silicium amorphe ou du SiC, et/ou
- un verre à bas point de fusion, de préférence un verre dont le point de fusion est inférieur à 600°C, plus préférentiellement un verre à bas point de fusion choisi parmi SiO₂-B₂O₃ ; Bi₂O₃-B₂O₃, ZnO-Bi₂O₃-B₂O₃, TeO₂-V₂O₅ et PbO-SiO₂.

9. Batterie selon l'une quelconque des revendications précédentes, **caractérisée en ce qu'**elle comprend un système de terminaison recouvrant au moins la zone de connexion anodique (75, 75') et au moins la zone de connexion cathodique (76, 76'), de préférence le système de terminaison comprenant successivement :
- une première couche de polymère conducteur, de préférence une résine chargée à l'argent,
- une seconde couche de nickel disposée sur la première couche du système de terminaison, et
- une troisième couche d'étain, disposée sur la deuxième couche du système de terminaison.

10. Procédé de fabrication d'une batterie selon l'une des revendications précédentes, ledit procédé de fabrication comprenant :
a) l'approvisionnement d'un empilement (I) de feuilles alternées, cet empilement comprenant des premières feuilles ou feuilles d'anode dont chacune est destinée à former une couche d'anode de plusieurs batteries, ainsi que des deuxièmes feuilles ou feuilles de cathode dont chacune est destinée à former une couche de cathode de plusieurs batteries,
chaque feuille d'anode comprenant au moins une fente ou zone vide (34) d'anode et chaque feuille de cathode comprenant au moins une fente ou zone vide (14) de cathode, chaque fente délimitant au moins une partie dudit espace libre de tout matériau d'électrode, d'électrolyte et de substrat collecteur de courant,
b) la réalisation d'un traitement thermique et/ou d'une compression mécanique de l'empilement de feuilles alternées précédemment approvisionné
c) pour chaque anode et chaque cathode, la réalisation d'au moins un premier trou débouchant (51, 53) dans le corps principal et la réalisation d'au moins un second trou débouchant (52, 54) dans le corps secondaire,
- ledit premier trou débouchant (51), réalisé dans le corps principal de la cathode, s'étendant dans le prolongement du second trou débouchant (54) réalisé dans le corps secondaire de l'anode, de sorte que ces trous (51, 54), s'étendant les uns dans le prolongement des autres, forment un premier passage débouchant (61) qui traverse de part en part la batterie,
- et ledit premier trou débouchant (53), réalisé dans le corps principal de l'anode, s'étendant dans le prolongement du second trou débouchant (52), réalisé dans le corps secondaire de la cathode, de sorte que ces trous (52, 53), s'étendant les uns dans le prolongement des autres, forment un second passage débouchant (63) qui traverse de part en part la batterie, étant entendu que l'étape c) peut être réalisée avant l'étape a) sur les feuilles d'anode et de cathode ou après l'étape b),
d) l'introduction d'un moyen conducteur cathodique (71, 71', 71") dans le premier passage débouchant (61) et d'un moyen conducteur anodique (73, 73', 73") dans le second passage débouchant (63), chacun de ces moyens conducteurs étant apte à collecter au moins une partie du courant de la batterie,
e) la réalisation de découpes (Dₙ, D'ₙ) permettant d'isoler une batterie donnée.

11. Procédé selon la revendication 10,
- pour la fabrication d'une batterie selon la revendication 2, dans lequel on réalise les passages débouchants à distance du bord latéral, ou
- pour la fabrication d'une batterie selon la revendication 3, dans lequel on ménage au moins une perforation sur le trajet de chaque découpe, chaque perforation délimitant au moins une partie de chaque passage débouchant.

12. Procédé selon l'une des revendications 10 à 11, dans lequel :
- ladite fente respectivement d'anode et de cathode comprend deux parties longitudinales (16, 36) au moins en partie superposées, destinées à délimiter les bords longitudinaux (103, 104) de la batterie, ainsi qu'une partie latérale (18, 38) reliant lesdites deux parties longitudinales, la partie latérale de la fente d'anode (38) et la partie latérale de la fente de cathode (18) étant mutuellement décalées, la première découpe s'étendant entre la partie latérale de la fente d'anode et l'extrémité en regard des parties longitudinales, alors que la seconde découpe s'étend entre la partie latérale de la fente de cathode et l'extrémité en regard des parties longitudinales,
chaque fente présente, de préférence, une forme globale de H où les parties longitudinales forment les évidements principaux verticaux du H et où la partie latérale forme le canal du H,
ou
- ladite fente respectivement d'anode et de cathode est allongée, en présentant notamment une forme de I, lesdites fentes d'anode étant mutuellement superposées, lesdites fentes de cathode étant mutuellement superposées, lesdites fentes d'anode étant décalées par rapport auxdites fentes de cathode de manière à définir une pluralité d'espaces intercalaires, lesdites découpes étant réalisées dans lesdits espaces intercalaires.

13. Procédé selon l'une des revendications 10 à 12, **caractérisé en ce que** :
- il comprend après l'étape b) ou après l'étape e) de réalisation de l'empilement découpé, une étape f) d'imprégnation de l'empilement découpé, par une phase porteuse d'ions de lithium telle que des électrolytes liquides ou un liquide ionique contenant des sels de lithium, et/ou
- il comprend après l'étape e) ou après l'étape f), l'encapsulation de l'empilement découpé, en déposant :
→ au moins une première couche de recouvrement, de préférence choisie parmi le parylène, le parylène de type F, le polyimide, les résines epoxy, le silicone, le polyamide, la silice sol-gel, la silice organique et/ou un mélange de ceux-ci, sur la batterie, et puis
→ au moins une deuxième couche de recouvrement composée d'une matière électriquement isolante, déposée par dépôt de couches atomiques ou PECVD, HDPCVD ou ICPCVD sur ladite au moins première couche de recouvrement,
étant entendu que la séquence d'au moins une première couche de recouvrement et d'au moins une deuxième couche de recouvrement peut être répétée z fois avec z ≥ 1,
et/ou
- on réalise les deux découpes (Dₙ, D'ₙ) au travers d'au moins une majorité des anodes et des cathodes, en particulier au travers de l'ensemble des anodes et des cathodes.

14. Dispositif consommateur d'énergie électrique (2000) comprenant un corps (2002) ainsi qu'une batterie selon l'une des revendications 1 à 9, ladite batterie étant apte à alimenter en énergie électrique ledit dispositif consommateur d'énergie électrique, et ledit support de connexion électrique de ladite batterie étant fixé sur ledit corps.

15. Procédé de fabrication d'une batterie, ladite batterie comprenant au moins une anode (3) et au moins une cathode (1), disposées l'une au-dessus de l'autre de manière alternée, ladite batterie (100) comprenant des bords longitudinaux (103,104) et des bords latéraux (101,102),
dans lequel l'anode (3) comprend :
- un substrat collecteur de courant,
- au moins une couche d'anode, et
- éventuellement une couche d'un matériau d'électrolyte ou d'un séparateur imprégné d'un électrolyte,
et la cathode (1) comprend :
- un substrat collecteur de courant,
- au moins une couche de cathode, et
- éventuellement une couche d'un matériau d'électrolyte ou d'un séparateur imprégné d'un électrolyte
de sorte que la batterie comprend un empilement élémentaire successivement d'au moins une couche d'anode, d'au moins une couche d'un matériau d'électrolyte ou d'un séparateur imprégné d'un électrolyte, et d'au moins une couche de cathode,
chaque anode (3) comprenant une zone de connexion anodique, située au voisinage d'un premier bord latéral de la batterie, alors que chaque cathode (1) comprend une zone de connexion cathodique, située sur un second bord latéral de la batterie, opposé audit premier bord,
batterie dans laquelle chaque anode et chaque cathode comprend un corps principal (111, 131) respectif, séparé d'un corps secondaire (112, 132) respectif, par un espace libre (113, 133) de tout matériau d'électrode et de substrat collecteur de courant, ledit espace libre reliant les bords longitudinaux (103, 104) opposés de la batterie,
ledit procédé de fabrication comprenant :
a) l'approvisionnement d'un empilement (I) de feuilles alternées, cet empilement comprenant des premières feuilles ou feuilles d'anode dont chacune est destinée à former une couche d'anode de plusieurs batteries, ainsi que des deuxièmes feuilles ou feuilles de cathode dont chacune est destinée à former une couche de cathode de plusieurs batteries,
chaque feuille d'anode comprenant au moins une fente ou zone vide (34) d'anode et chaque feuille de cathode comprenant au moins une fente ou zone vide (14) de cathode, chaque fente délimitant au moins une partie dudit espace libre de tout matériau d'électrode, d'électrolyte et de substrat collecteur de courant,
b) la réalisation d'un traitement thermique et/ou d'une compression mécanique de l'empilement de feuilles alternées précédemment approvisionné,
c) la réalisation de deux découpes (Dₙ, D'ₙ) s'étendant au moins partiellement à l'intérieur desdites fentes, la première découpe s'étendant entre la partie latérale de la fente d'anode et l'extrémité en regard des parties longitudinales, alors que la seconde découpe s'étend entre la partie latérale de la fente de cathode et l'extrémité en regard des parties longitudinales,
ce procédé étant **caractérisé en ce qu'**on ménage au moins une perforation sur le trajet de chaque découpe, de manière à faciliter la réalisation de cette découpe par un outil de découpe.

## Patentansprüche

1. Batterie (100), umfassend mindestens eine Anode (3) und mindestens eine Kathode (1), die abwechselnd übereinander angeordnet sind, wobei die Batterie (100) Seitenränder (101, 102) mit mindestens einem Anodenverbindungsbereich und mindestens einem Kathodenverbindungsbereich, der dem Anodenverbindungsbereich seitlich gegenüberliegt, und Längsränder (103, 104) aufweist, wobei die Anode (3) umfasst:
- ein Stromkollektorsubstrat,
- mindestens eine Anodenschicht, und
- eventuell eine Schicht aus einem Elektrolytmaterial oder einem mit einem Elektrolyten imprägnierten Separator,
und die Kathode (1) umfasst:
- ein Stromkollektorsubstrat,
- mindestens eine Kathodenschicht, und
- eventuell eine Schicht aus einem Elektrolytmaterial oder einem mit einem Elektrolyten imprägnierten Separator,
so dass die Batterie einen elementaren Stapel nacheinander aus mindestens einer Anodenschicht, mindestens einer Schicht aus einem Elektrolytmaterial oder einem mit einem Elektrolyten imprägnierten Separator und mindestens einer Kathodenschicht umfasst,
**dadurch gekennzeichnet, dass**
- jede Anode und jede Kathode einen jeweiligen Hauptkörper (111, 131) umfasst, der von einem jeweiligen Nebenkörper (112, 132) durch einen Raum (113, 133) frei von jeglichem Elektrodenmaterial und Stromkollektorsubstrat getrennt ist, wobei der Freiraum die gegenüberliegenden Längsränder (103, 104) der Batterie verbindet,
- jede Anode und jede Kathode in der Draufsicht mindestens ein erstes Durchgangsloch (51, 53), das in dem Hauptkörper ausgebildet ist, und ein zweites Durchgangsloch (52, 54), das in dem Nebenkörper ausgebildet ist, umfasst,
mit der Maßgabe, dass jedes erste Durchgangsloch (51), das im Hauptkörper der Kathode ausgebildet ist, sich in der Verlängerung jedes zweiten Durchgangslochs (54) erstreckt, das im Nebenkörper der Anode ausgebildet ist, so dass diese Löcher (51, 54), die sich in der Verlängerung der anderen erstrecken, eine erste Durchführung (61) bilden, die die Batterie von einer Seite zur anderen durchquert,
und dass jedes erste Durchgangsloch (53), das im Hauptkörper der Anode ausgebildet ist, sich in der Verlängerung jedes zweiten Durchgangslochs (52) erstreckt, das im Nebenkörper der Kathode ausgebildet ist, so dass diese Löcher (52, 53), die sich in der Verlängerung der anderen erstrecken, eine zweite Durchführung (63) bilden, die die Batterie von einer Seite zur anderen durchquert,
- die Batterie ferner mindestens ein Kathodenleitmittel (71, 71', 71''), das in der ersten Durchführung (61) aufgenommen ist, und mindestens ein Anodenleitmittel (73, 73', 73''), das in der zweiten Durchführung (63) aufgenommen ist, umfasst, wobei das Anodenleitmittel (73, 73', 73") geeignet ist, mindestens einen Teil des Batteriestroms in Richtung mindestens einer Anodenverbindungszone zu sammeln, und das Kathodenleitmittel (71, 71', 71'') geeignet ist, mindestens einen Teil des Batteriestroms in Richtung mindestens einer Kathodenverbindungszone zu sammeln.

2. Batterie nach vorhergehendem Anspruch, wobei sich jede Durchführung in einem Abstand von einem zugewandten Seitenrand (101, 102) erstreckt, vorzugsweise, wobei der kleinste Abstand (D₅₉ / D₅₆), der jede Durchführung (61) und den zugewandten Seitenrand trennt, zwischen 0,04 mm und 1,95 mm liegt.

3. Batterie nach Anspruch 1, wobei jede Durchführung direkt in dem Seitenrand (401, 402) ausgebildet ist, wobei das Kathoden- bzw. Anodenleitmittel bündig mit dem Seitenrand abschließt und insbesondere die Form eines Halbzylinders aufweist.

4. Batterie nach einem der vorhergehenden Ansprüche, **dadurch gekennzeichnet, dass** die Anoden- und Kathodenleitmittel unterschiedslos voneinander ausgewählt sind aus:
- einem Stab, der aus einem elektrisch leitenden Material geformt ist,
- einer Metallstange mit Presssitz,
- einer Metallstange, die von einem elektrisch leitenden Hülsenmaterial umgeben ist.

5. Batterie nach vorhergehendem Anspruch, wobei die beiden gegenüberliegenden Enden entweder des Stabs oder der Metallstange Befestigungsköpfe definieren.

6. Batterie nach einem der vorhergehenden Ansprüche, die ferner umfasst
- einen elektrischen Verbindungsträger, der mindestens teilweise aus einem leitenden Material hergestellt ist,
- Mittel zur elektrischen Isolierung, die es gestatten, zwei voneinander entfernte Bereiche dieses Verbindungsträgers gegenseitig zu isolieren, wobei diese entfernten Bereiche jeweilige elektrische Verbindungswege bilden,
- wobei das Kathodenleitmittel in elektrischen Kontakt mit einem ersten elektrischen Verbindungsweg gebracht wird, während das Anodenleitmittel in elektrischen Kontakt mit dem zweiten elektrischen Verbindungsweg gebracht wird.

7. Batterie nach vorhergehendem Anspruch, wobei:
- der elektrische Verbindungsträger vom Typ Monoschicht ist, insbesondere ein Metallgitter oder auch ein Silizium-Interposer, oder
- der elektrische Verbindungsträger mehrere Schichten umfasst, die untereinander angeordnet sind, wobei dieser Träger insbesondere vom Typ gedruckte Schaltung ist.

8. Batterie nach einem der vorhergehenden Ansprüche, **dadurch gekennzeichnet, dass**:
- die Querabmessung oder Breite des Freiraums (L₁₁₃) zwischen 0,01 mm und 0,5 mm liegt, und/oder
- die Querabmessung oder Breite der Nebenkörper (L₁₁₂) zwischen 0,05 mm und 2 mm liegt, und/oder
- freie Flächen der Nebenkörper bzw. der Kathoden (112') und der Anoden (132'), die dem Freiraum gegenüberliegen, mit freien Flächen des Hauptkörpers bzw. der Anoden (131') und der Kathoden (111') bündig sind, und/oder
- sie ein Verkapselungssystem umfasst, das vier der sechs Flächen der Batterie und teilweise die beiden anderen Flächen bedeckt, wobei diese beiden anderen Flächen gegenüberliegen und im Wesentlichen senkrecht zur ersten und zweiten Durchführung (61, 63) der Batterie sind, die mindestens einen Anodenverbindungsbereich und mindestens einen Kathodenverbindungsbereich umfasst; wobei das Verkapselungssystem vorzugsweise umfasst:
- mindestens eine erste Deckschicht, die vorzugsweise aus Parylen, F-Typ-Parylen, Polyimid, Epoxidharzen, Silikon, Polyamid, Sol-Gel-Kieselsäure, organischer Kieselsäure und/oder einer Mischung davon ausgewählt ist, die auf der Batterie aufgebracht wird,
- mindestens eine zweite Deckschicht, die aus einem elektrisch isolierenden Material zusammengesetzt ist, das durch Atomlagenabscheidung oder PECVD, HDPCVD oder ICPCVD auf die mindestens eine erste Deckschicht aufgebracht wird,
mit der Maßgabe, dass diese Abfolge von mindestens einer ersten Deckschicht und mindestens einer zweiten Deckschicht z-mal mit z ≥ 1 wiederholt werden kann,
oder vorzugsweise umfasst:
- mindestens eine erste Deckschicht mit einem sehr niedrigen WVTR-Koeffizienten, vorzugsweise einem WVTR-Koeffizienten von unter 10⁻⁵ g/m².d, die am Außenumfang des Stapels aus Anoden- und Kathodenfolie aufgebracht ist,
mit der Maßgabe, dass diese erste Deckschicht z'-mal mit z' ≥ 1 wiederholt werden kann,
wobei die mindestens eine erste Deckschicht vorzugsweise umfasst:
- ein keramisches Material, das vorzugsweise aus Oxiden, Nitriden, Oxynitriden, SiₓN_{y}, SiO₂, SiON von amorphem Silizium oder SiC ausgewählt ist, und/oder
- ein Glas mit einem niedrigen Schmelzpunkt, vorzugsweise ein Glas mit einem Schmelzpunkt unter 600°C, noch bevorzugter ein Glas mit einem niedrigen Schmelzpunkt, das aus SiO₂-B₂O₃; Bi₂O₃-B₂O₃, ZnO-Bi₂O₃-B₂O₃, TeO₂-V₂O₅ und PbO-SiO₂ ausgewählt ist

9. Batterie nach einem der vorhergehenden Ansprüche, **dadurch gekennzeichnet, dass** sie ein Abschlusssystem umfasst, das mindestens den Anodenverbindungsbereich (75, 75') und mindestens den Kathodenverbindungsbereich (76, 76') bedeckt, wobei das Abschlusssystem vorzugsweise nacheinander umfasst:
- eine erste Schicht aus einem leitenden Polymer, vorzugsweise ein mit Silber gefülltes Harz,
- eine zweite Nickelschicht, die auf der ersten Schicht des Abschlusssystems angeordnet ist, und
- eine dritte Schicht aus Zinn, die auf der zweiten Schicht des Abschlusssystems angeordnet ist.

10. Verfahren zur Herstellung einer Batterie nach einem der vorhergehenden Ansprüche, wobei das Herstellungsverfahren umfasst:
a) das Bereitstellen eines Stapels (I) aus abwechselnden Folien, wobei dieser Stapel erste Folien oder Anodenfolien, von denen jede dazu bestimmt ist, eine Anodenschicht mehrerer Batterien zu bilden, sowie zweite Folien oder Kathodenfolien, von denen jede dazu bestimmt ist, eine Kathodenschicht mehrerer Batterien zu bilden, umfasst,
wobei jede Anodenfolie mindestens einen Anodenschlitz oder Leerbereich (34) und jede Kathodenfolie mindestens einen Kathodenschlitz oder Leerbereich (14) aufweist, wobei jeder Schlitz mindestens einen Teil des Raums frei von jeglichem Elektroden-, Elektrolyt- und Stromkollektorsubstratmaterial begrenzt,
b) das Durchführen einer Wärmebehandlung und/oder einer mechanischen Verdichtung des zuvor bereitgestellten Stapels aus abwechselnden Folien,
c) für jede Anode und jede Kathode, das Herstellen von mindestens einem ersten Durchgangsloch (51, 53) im Hauptkörper und das Herstellen von mindestens einem zweiten Durchgangsloch (52, 54) im Nebenkörper,
- wobei das erste Durchgangsloch (51), das im Hauptkörper der Kathode ausgebildet ist, sich in der Verlängerung des zweiten Durchgangslochs (54) erstreckt, das im Nebenkörper der Anode ausgebildet ist, so dass diese Löcher (51, 54), die sich in der Verlängerung der anderen erstrecken, eine erste Durchführung (61) bilden, die die Batterie von einer Seite zur anderen durchquert,
- und das erste Durchgangsloch (53), das im Hauptkörper der Anode ausgebildet ist, sich in der Verlängerung des zweiten Durchgangslochs (52) erstreckt, das im Nebenkörper der Kathode ausgebildet ist, so dass diese Löcher (52, 53), die sich in der Verlängerung der anderen erstrecken, eine zweite Durchführung (63) bilden, die die Batterie von einer Seite zur anderen durchquert, mit der Maßgabe, dass der Schritt c) vor dem Schritt a) auf den Anoden- und Kathodenfolien oder nach dem Schritt b) durchgeführt werden kann,
d) das Einleiten eines Kathodenleitmittels (71, 71', 71'') in die erste Durchführung (61) und eines Anodenleitmittels (73, 73', 73") in die zweite Durchführung (63), wobei jedes dieser Leitmittel geeignet ist, mindestens einen Teil des Batteriestroms zu sammeln,
e) das Anfertigen von Schnitten (Dₙ, D'ₙ), die es gestatten, eine bestimmte Batterie zu isolieren.

11. Verfahren nach Anspruch 10,
- zur Herstellung einer Batterie nach Anspruch 2, wobei die Durchführungen in einem Abstand vom Seitenrand hergestellt werden, oder
- zur Herstellung einer Batterie nach Anspruch 3, wobei mindestens eine Perforation auf dem Weg jedes Schnitts ausgebildet wird, wobei jede Perforation mindestens einen Teil jeder Durchführung begrenzt.

12. Verfahren nach einem der Ansprüche 10 bis 11, wobei:
- der jeweilige Anoden- bzw. Kathodenschlitz zwei mindestens teilweise übereinander liegende Längsteile (16, 36), die dazu bestimmt sind, die Längsränder (103, 104) der Batterie zu begrenzen, sowie einen Seitenteil (18, 38), der die beiden Längsteile verbindet, umfasst, wobei der Seitenteil des Anodenschlitzes (38) und der Seitenteil des Kathodenschlitzes (18) gegeneinander versetzt sind, wobei sich der erste Schnitt zwischen dem Seitenteil des Anodenschlitzes und dem den Längsteilen zugewandten Ende erstreckt, während sich der zweite Schnitt zwischen dem Seitenteil des Kathodenschlitzes und dem den Längsteilen zugewandten Ende erstreckt,
wobei jeder Schlitz vorzugsweise eine globale H-Form aufweist, wobei die Längsteile die vertikalen Hauptausnehmungen des H bilden und der Seitenteil den Kanal des H bildet,
oder
- der jeweilige Anoden- und Kathodenschlitz länglich ist, wobei er insbesondere eine I-Form aufweist, wobei die Anodenschlitze gegenseitig übereinander liegen, wobei die Kathodenschlitze gegenseitig übereinander liegen, wobei die Anodenschlitze in Bezug auf die Kathodenschlitze derart versetzt sind, dass eine Vielzahl von Zwischenräumen definiert wird, wobei die Schnitte in den Zwischenräumen hergestellt sind.

13. Verfahren nach einem der Ansprüche 10 bis 12, **dadurch gekennzeichnet, dass**:
- es nach Schritt b) oder nach Schritt e) des Herstellens des geschnittenen Stapels einen Schritt f) des Imprägnierens des geschnittenen Stapels mit einer Lithiumionen tragenden Phase, wie flüssige Elektrolyte oder eine ionische Flüssigkeit, die Lithiumsalze enthält, umfasst, und/oder
- es nach Schritt e) oder nach Schritt f) das Verkapseln des geschnittenen Stapels umfasst, durch Aufbringen von:
→ mindestens einer ersten Deckschicht, vorzugsweise ausgewählt aus Parylen, F-Typ-Parylen, Polyimid, Epoxidharzen, Silikon, Polyamid, Sol-Gel-Siliziumdioxid, organischem Siliziumdioxid und/oder einer Mischung davon, auf der Batterie, und dann
→ mindestens einer zweiten Deckschicht, die aus einem elektrisch isolierenden Material zusammengesetzt ist, das durch Atomlagenabscheidung oder PECVD, HDPCVD oder ICPCVD auf die mindestens eine erste Deckschicht aufgebracht wird,
mit der Maßgabe, dass die Abfolge von mindestens einer ersten Deckschicht und mindestens einer zweiten Deckschicht z-mal mit z ≥ 1 wiederholt werden kann,
und/oder
- die beiden Schnitte (Dₙ, D'ₙ) durch mindestens eine Mehrheit der Anoden und der Kathoden, insbesondere durch die Gesamtheit der Anoden und der Kathoden, durchgeführt werden.

14. Elektrische Energieverbrauchervorrichtung (2000), die einen Körper (2002) sowie eine Batterie nach einem der Ansprüche 1 bis 9 umfasst, wobei die Batterie geeignet ist, die elektrische Energieverbrauchervorrichtung mit elektrischer Energie zu versorgen, und wobei der elektrische Verbindungsträger der Batterie an dem Körper befestigt ist.

15. Verfahren zur Herstellung einer Batterie, wobei die Batterie mindestens eine Anode (3) und mindestens eine Kathode (1) umfasst, die abwechselnd übereinander angeordnet sind, wobei die Batterie (100) Längsränder (103, 104) und Seitenränder (101, 102) umfasst,
wobei die Anode (3) umfasst:
- ein Stromkollektorsubstrat,
- mindestens eine Anodenschicht, und
- eventuell eine Schicht aus einem Elektrolytmaterial oder einem mit einem Elektrolyten imprägnierten Separator,
und die Kathode (1) umfasst:
- ein Stromkollektorsubstrat,
- mindestens eine Kathodenschicht, und
- eventuell eine Schicht aus einem Elektrolytmaterial oder einem mit einem Elektrolyten imprägnierten Separator
so dass die Batterie einen elementaren Stapel nacheinander aus mindestens einer Anodenschicht, mindestens einer Schicht aus einem Elektrolytmaterial oder einem mit einem Elektrolyten imprägnierten Separator und mindestens einer Kathodenschicht umfasst,
wobei jede Anode (3) einen Anodenverbindungsbereich umfasst, der sich in der Nähe eines ersten Seitenrands der Batterie befindet, während jede Kathode (1) einen Kathodenverbindungsbereich umfasst, der sich an einem zweiten Seitenrand der Batterie befindet, der dem ersten Rand gegenüberliegt,
wobei bei der Batterie jede Anode und jede Kathode einen jeweiligen Hauptkörper (111, 131) umfasst, der von einem jeweiligen Nebenkörper (112, 132) durch einen Raum (113, 133) frei von jeglichem Elektrodenmaterial und Stromkollektorsubstrat getrennt ist, wobei Freiraum die gegenüberliegenden Längsränder (103, 104) der Batterie verbindet,
wobei das Herstellungsverfahren umfasst:
a) das Bereitstellen eines Stapels (I) aus abwechselnden Folien, wobei dieser Stapel erste Folien oder Anodenfolien, von denen jede dazu bestimmt ist, eine Anodenschicht mehrerer Batterien zu bilden, sowie zweite Folien oder Kathodenfolien, von denen jede dazu bestimmt ist, eine Kathodenschicht mehrerer Batterien zu bilden, umfasst,
wobei jede Anodenfolie mindestens einen Anodenschlitz oder Leerbereich (34) und jede Kathodenfolie mindestens einen Kathodenschlitz oder Leerbereich (14) aufweist, wobei jeder Schlitz mindestens einen Teil des Raums frei von jeglichem Elektroden-, Elektrolyt- und Stromkollektorsubstratmaterial begrenzt,
b) das Durchführen einer Wärmebehandlung und/oder einer mechanischen Verdichtung des zuvor bereitgestellten Stapels aus abwechselnden Folien,
c) das Herstellen von zwei Schnitten (Dₙ, D'ₙ), die sich mindestens teilweise im Inneren der Schlitze erstrecken, wobei sich der erste Schnitt zwischen dem Seitenteil des Anodenschlitzes und dem den Längsteilen zugewandten Ende erstreckt, während sich der zweite Schnitt zwischen dem Seitenteil des Kathodenschlitzes und dem den Längsteilen zugewandten Ende erstreckt,
wobei dieses Verfahren **dadurch gekennzeichnet ist, dass** mindestens eine Perforation auf dem Weg jedes Schnitts ausgebildet wird, um die Durchführung dieses Schnitts durch ein Schneidwerkzeug zu erleichtern.

## Claims

1. A battery (100) comprising at least one anode (3) and at least one cathode (1), alternately disposed one above the other, said battery (100) comprising lateral edges (101, 102) comprising at least one anode connection zone and at least one cathode connection zone, laterally opposite the anode connection zone, and longitudinal edges (103, 104), wherein the anode (3) comprises:
- a current collector substrate,
- at least one anode layer, and
- optionally a layer of electrolyte material or of a separator impregnated with an electrolyte,
and the cathode (1) comprises:
- a current collector substrate,
- at least one cathode layer, and
- optionally a layer of electrolyte material or of a separator impregnated with an electrolyte,
such that the battery comprises an elementary stack successively of at least one anode layer, at least one layer of an electrolyte material or of a separator impregnated with an electrolyte, and at least one cathode layer,
**characterized in that**
- each anode and cathode comprises a respective primary body (111, 131), separated from a respective secondary body (112, 132), by a space (113, 133) free of any electrode material and current collector substrate, said free space connecting opposite longitudinal edges (103, 104) of the battery,
- each anode and cathode comprises, in plan view, at least one first through-hole (51, 53) made in the primary body and one second through-hole (52, 54) made in the secondary body,
with the understanding that that each first through-hole (51) made in the primary body of the cathode extends in the continuation of each second through-hole (54) made in the secondary body of the anode, such that these holes (51, 54), extending in the continuation of one another, form a first through-passage (61) which passes through the battery from end to end,
and that each first through-hole (53) in the primary body of the anode extends in the continuation of each second through-hole (52) made in the secondary body of the cathode, such that these holes (52, 53), extending in the continuation of one another, form a second through-passage (63) which passes through the battery from end to end,
- the battery further comprises at least one cathode conductive means (71, 71', 71") received in said first through-passage (61) and at least one anode conductive means (73, 73', 73") received in said second through-passage (63), the anode conducting means (73, 73', 73") being capable of collecting at least a part of the battery current flowing towards at least one anode connection zone and the cathode conductive means (71, 71', 71") being capable of collecting at least a part of the battery current towards at least one cathode connection zone.

2. Battery according to the preceding claim, wherein each through-passage extends at a distance from a facing lateral edge (101, 102), preferably wherein the shortest distance (D₅₉ / D₅₆) separating each through-passage (61) and said facing lateral edge is between 0.04 mm and 1.95 mm.

3. Battery as claimed in claim 1, in which each through passage is formed directly in said lateral edge (401, 402), the cathode or respectively the anode conductive means being flush with said lateral edge and having in particular the shape of a half-cylinder.

4. Battery according to any one of the preceding claims, **characterized in that** the anode and cathode conductive means are chosen, indifferently from one another, from among:
- a bar made of an electrically conductive material,
- a tight fit metal rod,
- a metal rod surrounded by an electrically conductive sheath material.

5. Battery according to the preceding claim, in which the two opposite ends of either said bar or of said metal rod define fastening heads.

6. Battery according to one of the preceding claims, further comprising
- an electrical connection support, made at least in part from a conductive material,
- electrical insulation means, enabling two distant regions of this connection support to be insulated from one another, these distant regions forming respective electrical connection paths,
- said cathode conductive means being brought into electrical contact with a first electrical connection path, whereas said anode conductive means is brought into electrical contact with the second electrical connection path.

7. Battery according to the preceding claim, wherein:
- the electrical connection support is of the single-layer type, in particular a metal grid or a silicon interposer, or
- the electrical connection support comprises a plurality of layers disposed one below the other, this support being in particular of the printed circuit board type.

8. Battery according to any of the preceding claims, **characterized in that**:
- the transverse dimension, or width, of the free space (L₁₁₃) is between 0.01 mm and 0.5 mm, and/or
- the transverse dimension, or width, of the secondary body (L₁₁₂) is between 0.05 mm and 2 mm, and/or
- free faces of the secondary bodies respectively of the cathodes (112') and of the anodes (132'), which are opposite the free space, are flush with the free faces of the primary body respectively of the anodes (131') and of the cathodes (111'), and/or
- it comprises an encapsulation system coating four of the six faces of said battery, and partially coating the other two faces, these other two faces being opposite and substantially perpendicular to the first and second through-passages (61, 63) of the battery comprising at least one anode connection zone and at least one cathode connection zone; the encapsulation system preferably comprising :
- at least one first cover layer, preferably chosen from among parylene, F-type parylene, polyimide, epoxy resins, silicone, polyamide, sol-gel silica, organic silica and/or a mixture thereof, deposited on the battery,
- at least one second cover layer consisting of an electrically insulating material, deposited by atomic layer deposition or PECVD, HDPCVD or ICPCVD on said at least one first cover layer,
with the understanding that this sequence of at least one first cover layer and of at least one second cover layer can be repeated z times with z ≥ 1.
or preferably comprising:
- at least one first cover layer with a very low WVTR coefficient, preferably a WVTR coefficient of less than 10⁻⁵ g/m².d, deposited at the outer periphery of the stack of anode and cathode foils,
with the understanding that this first cover layer can be repeated z' times with z' ≥ 1,
the at least one first cover layer preferably comprising:
- a ceramic material, preferably chosen from among oxides, nitrides, oxynitrides, SiₓN_{y}, SiO₂, SiON, amorphous silicon or SiC, and/or
- a low-melting point glass, preferably a glass with a melting point below 600°C, more preferably a low-melting point glass chosen from among SiO₂-B₂O₃ ; Bi₂O₃-B₂O₃ , ZnO-Bi₂O₃-B₂O₃, TeO₂-V₂O₅ and PbO-SiO₂.

9. Battery according to any one of the preceding claims, **characterized in that** it comprises a termination system covering at least the anode connection zone (75, 75') and at least the cathode connection zone (76, 76'), preferably the termination system comprising successively:
- a first layer of conductive polymer, preferably a silver-filled resin,
- a second layer of nickel disposed on the first layer of the termination system, and
- a third layer of tin, disposed on the second layer of the termination system.

10. A method of manufacturing a battery according to one of the preceding claims, said manufacturing method comprising:
a) supplying a stack (I) of alternating foils, this stack comprising first foils or anode foils, each of which is intended to form an anode layer of a plurality of batteries, and second foils or cathode foils, each of which is intended to form a cathode layer of a plurality of batteries,
each anode foil comprising at least one groove or zone (34) devoid of any anode and each cathode foil comprising at least one groove or zone (14) devoid of any cathode, each groove delimiting at least a part of said space free of any electrode material, electrolyte and current collector substrate,
b) heat treatingt and/or mechanically compressing the previously supplied stack of alternating foils
c) for each anode and each cathode, producing at least one first through-hole (51, 53) in the primary body and producing at least one second through-hole (52, 54) in the secondary body,
- said first through-hole (51), made in the primary body of the cathode, extending in the continuation of the second through-hole (54) made in the secondary body of the anode, such that these holes (51, 54), extending in with the continuation of one another, form a first through-passage (61) which passes through the battery from end to end,
- and said first through-hole (53), made in the primary body of the anode, extending in with the continuation of the second through-hole (52), made in the secondary body of the cathode, such that these holes (52, 53), extending in with the continuation of one another, form a second through-passage (63) which passes through the battery from end to end, with the understanding that step c) can be carried out before step a) on the anode and cathode foils or after step b),
d) introducing a cathode conductive means (71, 71', 71") into the first through-passage (61) and an anode conductive means (73, 73', 73") into the second through-passage (63), each of these conductive means being capable of collecting at least a part of the battery current,
e) making cuts (Dₙ, D'ₙ) to insulate a given battery.

11. Method according to claim 10,
- for manufacturing a battery according to claim 2, in which the through-holes are made at a distance from the lateral edge, or
- for manufacturing a battery according to claim 3, wherein at least one perforation is made along the path of each cut, each perforation delimiting at least a part of each through-passage.

12. Method according to one of claims 10 to 11, wherein:
- said anode and cathode grooves, respectively, comprise two longitudinal parts (16, 36) at least partly superimposed, intended to delimit the longitudinal edges (103, 104) of the battery, as well as a lateral part (18, 38) connecting said two longitudinal parts, the lateral part of the anode groove (38) and the lateral portion of the cathode groove (18) being offset from one another, the first cut extending between the lateral part of the anode groove and the end facing the longitudinal parts, whereas the second cut extends between the lateral part of the cathode groove and the end facing the longitudinal parts,
each groove has preferably an overall H-shape wherein the longitudinal parts form the vertical main recesses of the H and the lateral part forms the channel of the H, or
- said anode and cathode grooves respectively are elongated, in particular having an I-shape, said anode grooves being superimposed on top of one another, said cathode grooves being superimposed on top of one another, said anode grooves being offset relative to said cathode grooves so as to define a plurality of intermediate spaces, said cuts being made in said intermediate spaces.

13. Method according to one of claims 10 to 12, **characterized in that**:
- it comprises, after step b) or after step e) of producing the cut stack, a step f) of impregnating the cut stack with a phase carrying lithium ions such as liquid electrolytes or an ionic liquid containing lithium salts, and/or
- it comprises, after step e) or after step f), encapsulating the cut stack, by depositing:
→ at least one first cover layer, preferably chosen from among parylene, F-type parylene, polyimide, epoxy resins, silicone, polyamide, sol-gel silica, organic silica and/or a mixture thereof, on the battery, and then
→ at least one second cover layer consisting of an electrically insulating material, deposited by atomic layer deposition or PECVD, HDPCVD or ICPCVD on said at least one first cover layer,
with the understanding that the sequence of at least one first cover layer and at least one second cover layer can be repeated z times with z ≥ 1,
and/or
- the two cuts (Dₙ , D'ₙ) are made through at least a majority of the anodes and cathodes, in particular through all the anodes and cathodes.

14. An electric energy-consuming device (2000) comprising a body (2002) and a battery according to one of claims 1 to 9, said battery being capable of supplying electric energy to said electric energy-consuming device, and said electric connection support of said battery being fixed to said body.

15. A method of manufacturing a battery, said battery comprising at least one anode (3) and at least one cathode (1), disposed alternately one above the other, said battery (100) comprising longitudinal edges (103, 104) and lateral edges (101, 102),
in which the anode (3) comprises:
- a current collector substrate,
- at least one anode layer, and
- optionally a layer of an electrolyte material or of a separator impregnated with an electrolyte,
and the cathode (1) comprises :
- a current collector substrate,
- at least one cathode layer, and
- optionally a layer of an electrolyte material or of a separator impregnated with an electrolyte
such that the battery comprises an elementary stack successively of at least one anode layer, of at least one layer of an electrolyte material or of a separator impregnated with an electrolyte, and of at least one cathode layer,
each anode (3) comprising an anode connection zone, situated in the vicinity of a first lateral edge of the battery, whereas each cathode (1) comprises a cathode connection zone, situated on a second lateral edge of the battery, opposite said first edge,
in which battery each anode and each cathode comprises a respective primary body (111, 131), separated from a respective secondary body (112, 132), by a space (113, 133) free of any electrode material and currentcollector substrate, said free space connecting the opposite longitudinal edges (103, 104) of the battery, said manufacturing method comprising:
a) supplying a stack (I) of alternating foils, said stack comprising first foils or anode foils, each of which is intended to form an anode layer of a plurality of batteries, and second foils or cathode foils, each of which is intended to form a cathode layer of a plurality of batteries,
each anode foil comprising at least one groove or zone (34) devoid of any anode and each cathode foil comprising at least one groove or zone (14) devoid of any cathode, each groove delimiting at least a part of said space free of any electrode material, electrolyte and currentcollector substrate,
b) heat treating and/or mechanically compressing of the previously supplied stack of alternating foils,
c) making two cuts (Dₙ , D'ₙ) extending at least partially inside said grooves, the first cut extending between the lateral part of the anode groove and the end facing the longitudinal parts, whereas the second cut extends between the lateral part of the cathode groove and the end facing the longitudinal parts,
this method being **characterized in that** at least one perforation is made along the path of each cut, so that this cut is easy to make using a cutting tool.
